# EUROPEAN PATENT APPLICATION

(11) **EP 4 436 288 A1**
(43) Date of publication of application: **25.09.2024**
(21) Application number: 22914250.0
(22) Date of filing: 14.12.2022
(51) Int. Cl.: H04W 72/04

(54) **COMMUNICATION METHOD, TERMINAL DEVICE, NETWORK DEVICE AND COMMUNICATION SYSTEM**

(30) Priority: 29.12.2021 CN 202111640003; 21.01.2022 CN 202210074534
(71) Applicant: Huawei Technologies Co., Ltd., Shenzhen, Guangdong 518129 (CN)
(72) Inventor: HE, Hongli, Shenzhen, Guangdong 518129 (CN); LI, Xueru, Shenzhen, Guangdong 518129 (CN)
(74) Representative: Maiwald GmbH
(86) International application number: PCT/CN2022/138858
(87) International publication number: WO 2023/124995

(57) **Abstract**

Embodiments of this application provide a communication method. The method includes: A terminal device receives first configuration information from a network device, where the first configuration information indicates the terminal device to report channel state information, and the first configuration information includes identifiers of one or more first reference signals. The terminal device sends first information to the network device, where the first information includes channel state information of at least one second reference signal, and the at least one second reference signal is a part or all of the one or more first reference signals. The first information includes first indication information, and the first indication information indicates whether the terminal device stores a first quasi co-location QCL parameter of the at least one second reference signal. The terminal device reports whether the terminal device stores QCL parameters of some reference signals, so that the network device can learn of whether the terminal device stores QCL parameters of some reference signals.

## Description

This application claims priorities to Chinese Patent Application No. 202111640003.8, filed with the China National Intellectual Property Administration on December 29, 2021, and entitled "QCL PARAMETER REPORTING METHOD, UE, AND NETWORK DEVICE", and to Chinese Patent Application No. 202210074534.3, filed with the China National Intellectual Property Administration on January 21, 2022, and entitled "COMMUNICATION METHOD, TERMINAL DEVICE, NETWORK DEVICE, AND COMMUNICATION SYSTEM", both of which are incorporated herein by reference in their entireties.

### TECHNICAL FIELD

Embodiments of this application relate to the communication field, and more specifically, to a communication method, a terminal device, a network device, and a communication system.

### BACKGROUND

Quasi co-location (Quasi co-location, QCL) in new radio (new radio, NR) is defined as: Two channels are said to be QCL if a characteristic of one channel over which a symbol on one antenna port is conveyed can be inferred from the other channel over which a symbol on the other antenna port is conveyed. The following four QCL parameter types are defined in the NR:
- 'typeA': {Doppler shift, Doppler spread, average delay, delay spread}
- 'typeB': {Doppler shift, Doppler spread}
- 'typeC': {Doppler shift, average delay}
- 'typeD': {spatial domain receive parameter}

The QCL parameters of the typeA, the typeB, and the typeC may be used for time-frequency synchronization and channel estimation. Obtaining the Doppler shift may be understood as completing frequency domain synchronization. Obtaining the average delay may be understood as completing time domain synchronization. The Doppler spread and the delay spread may be obtained for channel estimation. The QCL parameter of the typeD indicates that spatial domain receive parameters used by the two antenna ports are the same or similar, and is used to assist a receiving device in determining a receive beam of the receiving device.

It may be learned from the foregoing descriptions that the QCL parameters are beneficial to improving communication performance. Therefore, how to enable a terminal device and a network device to learn of QCL parameters of some reference signals becomes an urgent problem to be resolved.

### SUMMARY

Embodiments of this application provide a communication method. A terminal device reports whether the terminal device stores QCL parameters of some reference signals, so that a network device can learn of whether the terminal device stores QCL parameters of some reference signals.

According to a first aspect, a communication method is provided. The method may be performed by a terminal device, or may be performed by a component (for example, a chip or a circuit) of a terminal device. This is not limited. For ease of description, the following uses an example in which the method is performed by a terminal device for description.

The communication method includes: A terminal device receives first configuration information from a network device, where the first configuration information indicates the terminal device to report channel state information, and the first configuration information includes identifiers of one or more first reference signals. The terminal device sends first information to the network device, where the first information includes channel state information of at least one second reference signal, and the at least one second reference signal is a part or all of the one or more first reference signals. The first information includes first indication information, and the first indication information indicates whether the terminal device stores a first quasi co-location QCL parameter of the at least one second reference signal.

Based on the foregoing technical solution, when reporting the channel state information, the terminal device synchronously reports whether first QCL parameters of some reference signals are included, so that the network device can learn of a status of first QCL parameters of reference signals stored in the terminal device, and determine whether the terminal device stores the first QCL parameters of some reference signals, to subsequently perform related configuration based on the first QCL parameters. For example, when an effective moment of an activated new TCI-state is determined based on information about the first QCL parameter, efficiency of activating the new TCI-state can be improved.

With reference to the first aspect, in some implementations of the first aspect, the method further includes: The terminal device receives the one or more first reference signals from the network device.

With reference to the first aspect, in some implementations of the first aspect, that the first indication information indicates whether the terminal device stores a first QCL parameter of the at least one second reference signal includes: The first indication information indicates whether the terminal device stores a second QCL parameter of at least one third reference signal of the at least one second reference signal. When the first indication information indicates that the terminal device stores the second QCL parameter of the at least one third reference signal of the at least one second reference signal, the first information further includes an identifier of the at least one third reference signal.

Based on the foregoing technical solution, the terminal device indicates second QCL parameters of which reference signals are stored in the terminal device, and determines a reference signal of which the second QCL parameter is stored in the terminal device, to subsequently perform related configuration based on the second QCL parameter.

With reference to the first aspect, in some implementations of the first aspect, any one of the at least one third reference signal meets a QCL relationship with a synchronization signal block SSB or a tracking reference signal TRS.

Based on the foregoing technical solution, the third reference signal of which the second QCL parameter is stored in the terminal device may meet the QCL relationship with the SSB, or the third reference signal of which the second QCL parameter is stored in the terminal device may meet the QCL relationship with the TRS. It indicates that the second QCL parameter of the third reference signal may be obtained by measuring an SSB or a TRS that has a QCL relationship with the third reference signal. Generally, the second QCL parameter obtained by measuring the SSB or the TRS is more accurate.

With reference to the first aspect, in some implementations of the first aspect, the method further includes: The terminal device receives second indication information from the network device, where the second indication information indicates to activate a transmission configuration indicator state TCI-state. When a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment. The first condition includes that the fourth reference signal is one of the at least one third reference signal, or the fourth reference signal meets the QCL relationship with one of the at least one third reference signal, where the first moment is earlier than the second moment.

With reference to the first aspect, in some implementations of the first aspect, the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

Based on the foregoing technical solution, the terminal device reports information about the second QCL parameter, so that the network device can determine whether the terminal device has the information about the second QCL parameter of an antenna port corresponding to the third reference signal, and the network device and the terminal device have a consistent understanding of whether the new TCI-state meets the first condition. In addition, it can be determined, based on whether the first condition is met, whether a moment at which the new TCI-state is activated is the first moment or the second moment. When the first condition is not met, the terminal device does not have a second QCL parameter corresponding to the TCI-state. Therefore, an additional SSB or TRS needs to be received after the second indication information to measure and process the second QCL parameter. The additional SSB or TRS has a QCL relationship with a reference signal associated with the TCI-state. That is, the second duration needs to be waited before the new TCI-state can be used. When the second condition is met, the terminal device has obtained a corresponding second QCL parameter, and a base station can also determine that the terminal device has obtained the corresponding second QCL parameter. Therefore, the new TCI-state can be used only after corresponding processing on the second indication information is completed. That is, only the first duration needs to be waited. However, when this technical solution does not exist, because the network device cannot determine whether the terminal device has the information about the second QCL parameter of the antenna port corresponding to the third reference signal, the new TCI-state can only be used after the second moment. However, in this solution, the network device and the terminal device have an opportunity to use the new TCI-state immediately after the first moment. That is, the QCL parameter is used to perform control and data channel transmission. This improves the efficiency of activating the new TCI-state.

With reference to the first aspect, in some implementations of the first aspect, that the fourth reference signal meets the QCL relationship with one of the at least one third reference signal includes: The fourth reference signal meets a typeA QCL relationship with one of the at least one third reference signal, where the typeA QCL relationship includes that a channel over which an antenna port conveys the fourth reference signal and a channel over which an antenna port conveys the third reference signal have common Doppler shift, Doppler spread, average delay, and delay spread.

Based on the foregoing technical solution, the first condition restricts the QCL relationship more strictly, so that when obtaining typeA QCL parameters of the fourth reference signal, the terminal device may use the TCI-state at the first moment. Because the typeA QCL parameters include more types of channel large-scale characteristics than typeC QCL parameters, the terminal device can perform channel estimation more accurately when having the typeA QCL parameters. This improves reliability of transmitting data by the terminal device by using the new TCI-state.

With reference to the first aspect, in some implementations of the first aspect, duration between a third moment and a fourth moment is less than or equal to a first threshold, where the third moment is a moment at which the terminal device receives the second indication information, and the fourth moment is a moment at which the terminal device sends the first information.

Based on the foregoing technical solution, a time interval between receiving an activation indication and reporting the first information by the terminal device cannot be excessively large, to ensure timeliness.

With reference to the first aspect, in some implementations of the first aspect, the method further includes: The terminal device receives third indication information from the network device, where the third indication information indicates the terminal device to report a type of the second QCL parameter. The first information further includes fourth indication information, and the fourth indication information indicates the type of the second QCL parameter that is of the at least one third reference signal and that is obtained by the terminal device.

With reference to the first aspect, in some implementations of the first aspect, the reported type of the second QCL parameter includes a typeA or a typeC.

Based on the foregoing technical solution, when the network device indicates the terminal device to report the type of the obtained second QCL parameter, different configurations may be performed based on the type of the second QCL parameter obtained by the terminal. For example, when the type of the second QCL parameter obtained by the terminal includes only the typeC and does not include the typeA, accuracy of channel estimation performed by the terminal may be limited, and the network device may use a low-rate modulation and demodulation manner during transmission to the terminal device, to improve transmission reliability.

According to a second aspect, a communication method is provided. The method may be performed by a network device, or may be performed by a component (for example, a chip or a circuit) of a network device. This is not limited. For ease of description, the following uses an example in which the method is performed by a network device for description.

The communication method includes: A network device sends first configuration information to a terminal device, where the first configuration information indicates the terminal device to report channel state information, and the first configuration information includes identifiers of one or more first reference signals. The network device receives first information from the terminal device, where the first information includes channel state information of at least one second reference signal, and the at least one second reference signal is a part or all of the one or more first reference signals. The first information includes first indication information, and the first indication information indicates whether the terminal device stores a first quasi co-location QCL parameter of the at least one second reference signal.

With reference to the second aspect, in some implementations of the second aspect, the method further includes: The network device sends the one or more first reference signals to the terminal device.

With reference to the second aspect, in some implementations of the second aspect, that the first indication information indicates whether the terminal device stores a first QCL parameter of the at least one second reference signal includes: The first indication information indicates whether the terminal device stores a second QCL parameter of at least one third reference signal of the at least one second reference signal. When the first indication information indicates that the terminal device stores the second QCL parameter of the at least one third reference signal of the at least one second reference signal, the first information further includes an identifier of the at least one third reference signal.

With reference to the second aspect, in some implementations of the second aspect, any one of the at least one third reference signal meets a QCL relationship with a synchronization signal block SSB or a tracking reference signal TRS.

With reference to the second aspect, in some implementations of the second aspect, the method further includes: The network device sends second indication information to the terminal device, where the second indication information indicates to activate a transmission configuration indicator state TCI-state. When a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment. The first condition includes that the fourth reference signal is one of the at least one third reference signal, or the fourth reference signal meets the QCL relationship with one of the at least one third reference signal, where the first moment is earlier than the second moment.

With reference to the second aspect, in some implementations of the second aspect, the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

With reference to the second aspect, in some implementations of the second aspect, that the fourth reference signal meets the QCL relationship with one of the at least one third reference signal includes: The fourth reference signal meets a typeA QCL relationship with one of the at least one third reference signal, where the typeA QCL relationship includes that a channel over which an antenna port conveys the fourth reference signal and a channel over which an antenna port conveys the third reference signal have common Doppler shift, Doppler spread, average delay, and delay spread.

With reference to the second aspect, in some implementations of the second aspect, duration between a third moment and a fourth moment is less than or equal to a first threshold, where the third moment is a moment at which the terminal device receives the second indication information, and the fourth moment is a moment at which the terminal device sends the first information.

With reference to the second aspect, in some implementations of the second aspect, the method further includes: The network device sends third indication information to the terminal device, where the third indication information indicates the terminal device to report a type of the second QCL parameter. The first information further includes fourth indication information, and the fourth indication information indicates the type of the second QCL parameter that is of the at least one third reference signal and that is obtained by the terminal device.

With reference to the second aspect, in some implementations of the second aspect, the reported type of the second QCL parameter includes a typeA or a typeC.

For beneficial effects of the method shown in the second aspect and the possible designs of the second aspect, refer to the beneficial effects in the first aspect and the possible designs of the first aspect.

According to a third aspect, a communication method is provided. The method may be performed by a terminal device, or may be performed by a component (for example, a chip or a circuit) of a terminal device. This is not limited. For ease of description, the following uses an example in which the method is performed by a terminal device for description.

The communication method includes: A terminal device obtains a second quasi co-location QCL parameter of at least one third reference signal. The terminal device sends first information to a network device, where the first information includes an identifier of the at least one third reference signal, and the first information indicates that the terminal device stores the second QCL parameter of the at least one third reference signal.

Based on the foregoing technical solution, the terminal device reports a status of the stored second QCL parameter of the reference signal, and determines that the terminal device stores second QCL parameters of some reference signals, to subsequently perform related configuration based on the second QCL parameter.

With reference to the third aspect, in some implementations of the third aspect, any one of the at least one third reference signal is a synchronization signal block SSB or a tracking reference signal TRS, or any one of the at least one third reference signal meets a QCL relationship with a synchronization signal block SSB or a tracking reference signal TRS.

With reference to the third aspect, in some implementations of the third aspect, the method further includes: The terminal device receives second indication information from the network device, where the second indication information indicates to activate a transmission configuration indicator state TCI-state. When the at least one third reference signal includes a fourth reference signal corresponding to the TCI-state, an effective moment of the TCI-state is a moment after the first information is sent.

With reference to the third aspect, in some implementations of the third aspect, the method further includes: The terminal device receives second indication information from the network device, where the second indication information indicates to activate a transmission configuration indicator state TCI-state. When a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment. The first condition includes that the fourth reference signal is one of the at least one third reference signal, or the fourth reference signal meets the QCL relationship with one of the at least one third reference signal, where the first moment is earlier than the second moment.

With reference to the third aspect, in some implementations of the third aspect, the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

With reference to the third aspect, in some implementations of the third aspect, that the fourth reference signal meets the QCL relationship with one of the at least one third reference signal includes: The fourth reference signal meets a typeA QCL relationship with one of the at least one third reference signal, where the typeA QCL relationship includes that a channel over which an antenna port conveys the fourth reference signal and a channel over which an antenna port conveys the third reference signal have common Doppler shift, Doppler spread, average delay, and delay spread.

With reference to the third aspect, in some implementations of the third aspect, duration between a third moment and a fourth moment is less than or equal to a first threshold, where the third moment is a moment at which the terminal device receives the second indication information, and the fourth moment is a moment at which the terminal device sends the first information.

With reference to the third aspect, in some implementations of the third aspect, the method further includes: The terminal device receives third indication information from the network device, where the third indication information indicates the terminal device to report a type of the second QCL parameter. The first information further includes fourth indication information, and the fourth indication information indicates the type of the second QCL parameter that is of the at least one third reference signal and that is obtained by the terminal device.

With reference to the third aspect, in some implementations of the third aspect, the reported type of the second QCL parameter includes a typeA or a typeC.

According to a fourth aspect, a communication method is provided. The method may be performed by a network device, or may be performed by a component (for example, a chip or a circuit) of a network device. This is not limited. For ease of description, the following uses an example in which the method is performed by a network device for description.

The communication method includes: A network device receives first information from a terminal device, where the first information includes an identifier of at least one third reference signal, and the first information indicates that the terminal device stores a second quasi co-location QCL parameter of the at least one third reference signal. The network device determines that the terminal device stores the second QCL parameter of the at least one third reference signal.

With reference to the fourth aspect, in some implementations of the fourth aspect, any one of the at least one third reference signal is a synchronization signal block SSB or a tracking reference signal TRS, or any one of the at least one third reference signal meets a QCL relationship with a synchronization signal block SSB or a tracking reference signal TRS.

With reference to the fourth aspect, in some implementations of the fourth aspect, the method further includes: The network device sends second indication information to the terminal device, where the second indication information indicates to activate a transmission configuration indicator state TCI-state. When the at least one third reference signal includes a fourth reference signal corresponding to the TCI-state, an effective moment of the TCI-state is a moment after the first information is sent.

With reference to the fourth aspect, in some implementations of the fourth aspect, the method further includes: The network device sends second indication information to the terminal device, where the second indication information indicates to activate a transmission configuration indicator state TCI-state. When a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment. The first condition includes that the fourth reference signal is one of the at least one third reference signal, or the fourth reference signal meets the QCL relationship with one of the at least one third reference signal, where the first moment is earlier than the second moment.

With reference to the fourth aspect, in some implementations of the fourth aspect, the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

With reference to the fourth aspect, in some implementations of the fourth aspect, that the fourth reference signal meets the QCL relationship with one of the at least one third reference signal includes: The fourth reference signal meets a typeA QCL relationship with one of the at least one third reference signal, where the typeA QCL relationship includes that a channel over which an antenna port conveys the fourth reference signal and a channel over which an antenna port conveys the third reference signal have common Doppler shift, Doppler spread, average delay, and delay spread.

With reference to the fourth aspect, in some implementations of the fourth aspect, duration between a third moment and a fourth moment is less than or equal to a first threshold, where the third moment is a moment at which the terminal device receives the second indication information, and the fourth moment is a moment at which the terminal device sends the first information.

With reference to the fourth aspect, in some implementations of the fourth aspect, the method further includes: The network device sends third indication information to the terminal device, where the third indication information indicates the terminal device to report a type of the second QCL parameter. The first information further includes fourth indication information, and the fourth indication information indicates the type of the second QCL parameter that is of the at least one third reference signal and that is obtained by the terminal device.

With reference to the fourth aspect, in some implementations of the fourth aspect, the reported type of the second QCL parameter includes a typeA or a typeC.

For beneficial effects of the method shown in the fourth aspect and the possible designs of the fourth aspect, refer to the beneficial effects in the third aspect and the possible designs of the third aspect.

According to a fifth aspect, a communication apparatus is provided. The apparatus is configured to perform the method provided in the first aspect. Specifically, the communication apparatus includes:
a receiving unit, configured to receive first configuration information from a network device, where the first configuration information indicates the communication apparatus to report channel state information, and the first configuration information includes identifiers of one or more first reference signals; and a sending unit, configured to send first information to the network device, where the first information includes channel state information of at least one second reference signal, and the at least one second reference signal is a part or all of the one or more first reference signals. The first information includes first indication information, and the first indication information indicates whether the communication apparatus stores a first quasi co-location QCL parameter of the at least one second reference signal.

With reference to the fifth aspect, in some implementations of the fifth aspect, the receiving unit is further configured to receive the one or more first reference signals from the network device.

With reference to the fifth aspect, in some implementations of the fifth aspect, any one of at least one third reference signal meets a QCL relationship with a synchronization signal block SSB or a tracking reference signal TRS.

With reference to the fifth aspect, in some implementations of the fifth aspect, that the first indication information indicates whether the terminal device stores a first QCL parameter of the at least one second reference signal includes: The first indication information indicates whether the terminal device stores a second QCL parameter of at least one third reference signal of the at least one second reference signal. When the first indication information indicates that the terminal device stores the second QCL parameter of the at least one third reference signal of the at least one second reference signal, the first information further includes an identifier of the at least one third reference signal.

With reference to the fifth aspect, in some implementations of the fifth aspect, the receiving unit is further configured to receive second indication information from the network device, where the second indication information indicates to activate a transmission configuration indicator state TCI-state.

When a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment. The first condition includes that the fourth reference signal is one of the at least one third reference signal, or the fourth reference signal meets the QCL relationship with one of the at least one third reference signal, where the first moment is earlier than the second moment.

With reference to the fifth aspect, in some implementations of the fifth aspect, the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

With reference to the fifth aspect, in some implementations of the fifth aspect, that the fourth reference signal meets the QCL relationship with one of the at least one third reference signal includes: The fourth reference signal meets a typeA QCL relationship with one of the at least one third reference signal, where the typeA QCL relationship includes that a channel over which an antenna port conveys the fourth reference signal and a channel over which an antenna port conveys the third reference signal have common Doppler shift, Doppler spread, average delay, and delay spread.

With reference to the fifth aspect, in some implementations of the fifth aspect, duration between a third moment and a fourth moment is less than or equal to a first threshold, where the third moment is a moment at which the receiving unit receives the second indication information, and the fourth moment is a moment at which the sending unit sends the first information.

With reference to the fifth aspect, in some implementations of the fifth aspect, the apparatus further includes: a receiving unit, configured to receive third indication information from the network device, where the third indication information indicates the terminal device to report a type of the second QCL parameter. The first information further includes fourth indication information, and the fourth indication information indicates the type of the second QCL parameter that is of the at least one third reference signal and that is obtained by the terminal device.

With reference to the fifth aspect, in some implementations of the fifth aspect, the reported type of the second QCL parameter includes a typeA or a typeC.

For beneficial effects of the method shown in the fifth aspect and the possible designs of the fifth aspect, refer to the beneficial effects in the first aspect and the possible designs of the first aspect.

According to a sixth aspect, a communication apparatus is provided. The apparatus is configured to perform the method provided in the second aspect. Specifically, the communication apparatus includes:
a sending unit, configured to send first configuration information to a terminal device, where the first configuration information indicates the terminal device to report channel state information, and the first configuration information includes identifiers of one or more first reference signals; and a receiving unit, configured to receive first information from the terminal device, where the first information includes channel state information of at least one second reference signal, and the at least one second reference signal is a part or all of the one or more first reference signals. The first information includes first indication information, and the first indication information indicates whether the terminal device stores a first quasi co-location QCL parameter of the at least one second reference signal.

With reference to the sixth aspect, in some implementations of the sixth aspect, the sending unit is further configured to send the one or more first reference signals to the terminal device.

With reference to the sixth aspect, in some implementations of the sixth aspect, that the first indication information indicates whether the terminal device stores a first QCL parameter of the at least one second reference signal includes: The first indication information indicates whether the terminal device stores a second QCL parameter of at least one third reference signal of the at least one second reference signal. When the first indication information indicates that the terminal device stores the second QCL parameter of the at least one third reference signal of the at least one second reference signal, the first information further includes an identifier of the at least one third reference signal.

With reference to the sixth aspect, in some implementations of the sixth aspect, any one of the at least one third reference signal meets a QCL relationship with a synchronization signal block SSB or a tracking reference signal TRS.

With reference to the sixth aspect, in some implementations of the sixth aspect, the sending unit is configured to send second indication information to the terminal device, where the second indication information indicates to activate a transmission configuration indicator state TCI-state. When a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment. The first condition includes that the fourth reference signal is one of the at least one third reference signal, or the fourth reference signal meets the QCL relationship with one of the at least one third reference signal, where the first moment is earlier than the second moment.

With reference to the sixth aspect, in some implementations of the sixth aspect, the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

With reference to the sixth aspect, in some implementations of the sixth aspect, that the fourth reference signal meets the QCL relationship with one of the at least one third reference signal includes: The fourth reference signal meets a typeA QCL relationship with one of the at least one third reference signal, where the typeA QCL relationship includes that a channel over which an antenna port conveys the fourth reference signal and a channel over which an antenna port conveys the third reference signal have common Doppler shift, Doppler spread, average delay, and delay spread.

With reference to the sixth aspect, in some implementations of the sixth aspect, duration between a third moment and a fourth moment is less than or equal to a first threshold, where the third moment is a moment at which the terminal device receives the second indication information, and the fourth moment is a moment at which the terminal device sends the first information.

With reference to the sixth aspect, in some implementations of the sixth aspect, the apparatus further includes: a sending unit, configured to send third indication information to the terminal device, where the third indication information indicates the terminal device to report a type of the second QCL parameter. The first information further includes fourth indication information, and the fourth indication information indicates the type of the second QCL parameter that is of the at least one third reference signal and that is obtained by the terminal device.

With reference to the sixth aspect, in some implementations of the sixth aspect, the reported type of the second QCL parameter includes a typeA or a typeC.

For beneficial effects of the method shown in the sixth aspect and the possible designs of the sixth aspect, refer to the beneficial effects in the second aspect and the possible designs of the second aspect.

According to a seventh aspect, a communication apparatus is provided. The apparatus is configured to perform the method provided in the third aspect. Specifically, the communication apparatus includes:
a processing unit, configured to obtain a second quasi co-location QCL parameter of at least one third reference signal; and a sending unit, configured to send first information to a network device, where the first information includes an identifier of the at least one third reference signal, and the first information indicates that the terminal device stores the second QCL parameter of the at least one third reference signal.

With reference to the seventh aspect, in some implementations of the seventh aspect, any one of the at least one third reference signal is a synchronization signal block SSB or a tracking reference signal TRS, or any one of the at least one third reference signal meets a QCL relationship with a synchronization signal block SSB or a tracking reference signal TRS.

With reference to the seventh aspect, in some implementations of the seventh aspect, the apparatus further includes: a receiving unit, configured to receive second indication information from the network device, where the second indication information indicates to activate a transmission configuration indicator state TCI-state. When the at least one third reference signal includes a fourth reference signal corresponding to the TCI-state, an effective moment of the TCI-state is a moment after the first information is sent.

With reference to the seventh aspect, in some implementations of the seventh aspect, the apparatus further includes: a receiving unit, configured to receive second indication information from the network device, where the second indication information indicates to activate a transmission configuration indicator state TCI-state. When a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment. The first condition includes that the fourth reference signal is one of the at least one third reference signal, or the fourth reference signal meets the QCL relationship with one of the at least one third reference signal, where the first moment is earlier than the second moment.

With reference to the seventh aspect, in some implementations of the seventh aspect, the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

With reference to the seventh aspect, in some implementations of the seventh aspect, that the fourth reference signal meets the QCL relationship with one of the at least one third reference signal includes: The fourth reference signal meets a typeA QCL relationship with one of the at least one third reference signal, where the typeA QCL relationship includes that a channel over which an antenna port conveys the fourth reference signal and a channel over which an antenna port conveys the third reference signal have common Doppler shift, Doppler spread, average delay, and delay spread.

With reference to the seventh aspect, in some implementations of the seventh aspect, duration between a third moment and a fourth moment is less than or equal to a first threshold, where the third moment is a moment at which the receiving unit receives the second indication information, and the fourth moment is a moment at which the sending unit sends the first information.

With reference to the seventh aspect, in some implementations of the seventh aspect, the apparatus further includes: a receiving unit, configured to receive third indication information from the network device, where the third indication information indicates the terminal device to report a type of the second QCL parameter. The first information further includes fourth indication information, and the fourth indication information indicates the type of the second QCL parameter that is of the at least one third reference signal and that is obtained by the processing unit.

With reference to the seventh aspect, in some implementations of the seventh aspect, the reported type of the second QCL parameter includes a typeA or a typeC.

For beneficial effects of the method shown in the seventh aspect and the possible designs of the seventh aspect, refer to the beneficial effects in the third aspect and the possible designs of the third aspect.

According to an eighth aspect, a communication apparatus is provided. The apparatus is configured to perform the method provided in the fourth aspect. Specifically, the communication apparatus includes:
a receiving unit, configured to receive first information from a terminal device, where the first information includes an identifier of at least one third reference signal, and the first information indicates that the terminal device stores a second quasi co-location QCL parameter of the at least one third reference signal; and a processing unit, configured to determine that the terminal device stores the second QCL parameter of the at least one third reference signal.

With reference to the eighth aspect, in some implementations of the eighth aspect, any one of the at least one third reference signal is a synchronization signal block SSB or a tracking reference signal TRS, or any one of the at least one third reference signal meets a QCL relationship with a synchronization signal block SSB or a tracking reference signal TRS.

With reference to the eighth aspect, in some implementations of the eighth aspect, the apparatus further includes: a sending unit, configured to send second indication information to the terminal device, where the second indication information indicates to activate a transmission configuration indicator state TCI-state. When the at least one third reference signal includes a fourth reference signal corresponding to the TCI-state, an effective moment of the TCI-state is a moment after the first information is sent.

With reference to the eighth aspect, in some implementations of the eighth aspect, the apparatus further includes: a sending unit, configured to send second indication information to the terminal device, where the second indication information indicates to activate a transmission configuration indicator state TCI-state. When a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment. The first condition includes that the fourth reference signal is one of the at least one third reference signal, or the fourth reference signal meets the QCL relationship with one of the at least one third reference signal, where the first moment is earlier than the second moment.

With reference to the eighth aspect, in some implementations of the eighth aspect, the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

With reference to the eighth aspect, in some implementations of the eighth aspect, that the fourth reference signal meets the QCL relationship with one of the at least one third reference signal includes: The fourth reference signal meets a typeA QCL relationship with one of the at least one third reference signal, where the typeA QCL relationship includes that a channel over which an antenna port conveys the fourth reference signal and a channel over which an antenna port conveys the third reference signal have common Doppler shift, Doppler spread, average delay, and delay spread.

With reference to the eighth aspect, in some implementations of the eighth aspect, duration between a third moment and a fourth moment is less than or equal to a first threshold, where the third moment is a moment at which the terminal device receives the second indication information, and the fourth moment is a moment at which the terminal device sends the first information.

With reference to the eighth aspect, in some implementations of the eighth aspect, the apparatus further includes: a sending unit, configured to send third indication information to the terminal device, where the third indication information indicates the terminal device to report a type of the second QCL parameter. The first information further includes fourth indication information, and the fourth indication information indicates the type of the second QCL parameter that is of the at least one third reference signal and that is obtained by the terminal device.

With reference to the eighth aspect, in some implementations of the eighth aspect, the reported type of the second QCL parameter includes a typeA or a typeC.

For beneficial effects of the method shown in the eighth aspect and the possible designs of the eighth aspect, refer to the beneficial effects in the fourth aspect and the possible designs of the fourth aspect.

According to a ninth aspect, a communication apparatus is provided. The apparatus is configured to perform the method provided in the first aspect or the third aspect. Specifically, the communication apparatus may include units and/or modules, such as a processing unit and an obtaining unit, configured to perform the method provided in any implementation of the first aspect or the third aspect.

In an implementation, the communication apparatus is a terminal device. When the communication apparatus is a terminal device, a transceiver unit may be a transceiver or an input/output interface; and a processing unit may be at least one processor. Optionally, the transceiver may be a transceiver circuit. Optionally, the input/output interface may be an input/output circuit.

In another implementation, when the communication apparatus is a chip, a chip system, or a circuit in a terminal device, a transceiver unit may be an input/output interface, an interface circuit, an output circuit, an input circuit, a pin, a related circuit, or the like on the chip, the chip system, or the circuit; and a processing unit may be at least one processor, a processing circuit, a logic circuit, or the like.

For beneficial effects of the method shown in the ninth aspect and the possible designs of the ninth aspect, refer to the beneficial effects in the first aspect or the third aspect, and the possible designs of the first aspect or the third aspect.

According to a tenth aspect, a communication apparatus is provided. The apparatus is configured to perform the method provided in the second aspect or the fourth aspect. Specifically, the communication apparatus may include units and/or modules, such as a processing unit and an obtaining unit, configured to perform the method provided in the second aspect or the fourth aspect.

In an implementation, the communication apparatus is a network device. When the communication apparatus is a network device, a transceiver unit may be a transceiver or an input/output interface; and a processing unit may be at least one processor. Optionally, the transceiver may be a transceiver circuit. Optionally, the input/output interface may be an input/output circuit.

In another implementation, when the communication apparatus is a chip, a chip system, or a circuit in a network device, a transceiver unit may be an input/output interface, an interface circuit, an output circuit, an input circuit, a pin, a related circuit, or the like on the chip, the chip system, or the circuit; and a processing unit may be at least one processor, a processing circuit, a logic circuit, or the like.

According to an eleventh aspect, this application provides a processor, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable storage medium stores program code executed by a device, and the program code is used for performing the method provided in any implementation of the first aspect to the fourth aspect.

According to a thirteenth aspect, a computer program product including instructions is provided. When the computer program product is run on a computer, the computer is enabled to perform the method provided in any implementation of the first aspect to the fourth aspect.

According to a fourteenth aspect, a chip is provided. The chip includes a processor and a communication interface. The processor reads, through the communication interface, instructions stored in a memory, to perform the method provided in any implementation of the first aspect to the fourth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method provided in any implementation of the first aspect to the fourth aspect.

According to a fifteenth aspect, a communication system is provided. The communication system includes the communication apparatus according to the fifth aspect and the communication apparatus according to the sixth aspect, or includes the communication apparatus according to the seventh aspect and the communication apparatus according to the eighth aspect.

### BRIEF DESCRIPTION OF DRAWINGS

FIG. 1 is a diagram of a communication system to which this application is applicable;
FIG. 2 is a diagram of beam training according to this application;
FIG. 3 is a diagram of configuration of a control resource set CORESET and a search space searchSpace according to this application;
FIG. 4 is a diagram of beam configuration update according to this application;
FIG. 5 is a schematic flowchart of a communication method according to this application;
FIG. 6 is a diagram of a first moment and a second moment according to this application;
FIG. 7 is a schematic flowchart of another communication method according to this application;
FIG. 8 is a diagram of a communication apparatus according to this application;
FIG. 9 is a diagram of a structure of a terminal device according to this application;
FIG. 10 is a diagram of another communication apparatus according to this application; and
FIG. 11 is a diagram of a structure of a network device according to this application.

### DESCRIPTION OF EMBODIMENTS

The following describes technical solutions of embodiments in this application with reference to accompanying drawings.

The technical solutions in embodiments of this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions in embodiments of this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

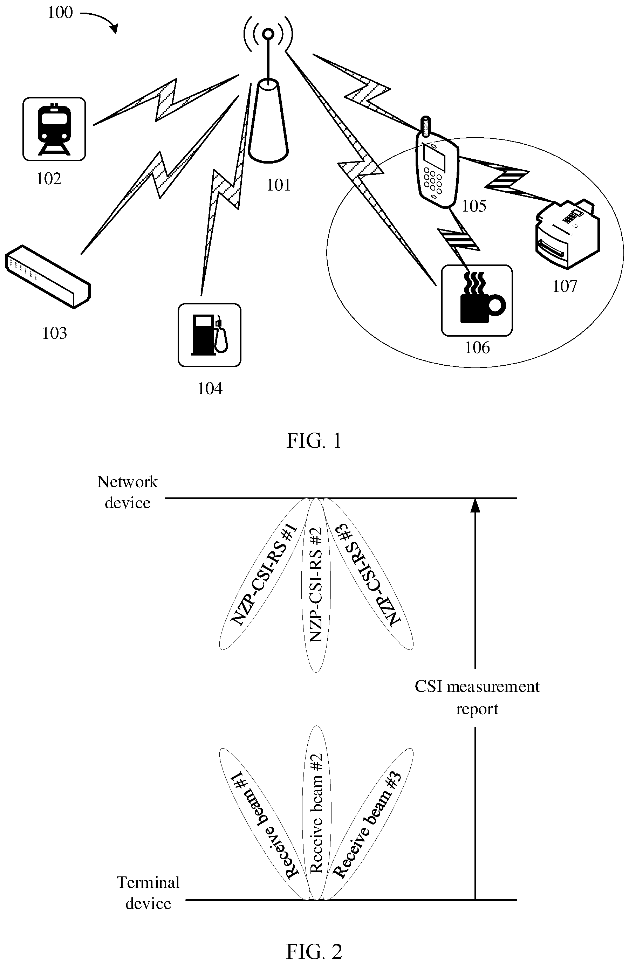

For ease of understanding of embodiments of this application, a communication system to which this application is applicable is first briefly described with reference to FIG. 1.

A terminal device (terminal device) in embodiments of this application may be an access terminal, a subscriber unit, a subscriber station, a mobile station, a relay station, a remote station, a remote terminal, a mobile device, a user terminal (user terminal), user equipment (user equipment, UE), a terminal (terminal), a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile communication network (public land mobile network, PLMN), a terminal device in a future internet of vehicles, or the like. This is not limited in embodiments of this application.

As an example, rather than a limitation, in embodiments of this application, the wearable device may also be referred to as a wearable intelligent device, and is a general term of wearable devices that intelligently designed and developed for daily wear by using a wearable technology, for example, glasses, gloves, watches, clothes, and shoes. The wearable device is a portable device that is worn on a body directly or integrated into clothes or an accessory of a user. The wearable device is not merely a hardware device, but further implements a powerful function through software support, data exchange, and cloud exchange. In a broad sense, wearable intelligent devices include full-featured devices that can implement all or some of functions without relying on smartphones, for example, smart watches or smart glasses, and include devices that focus on only one type of application function and need to be used together with other devices such as smartphones, for example, various smart bands or smart jewelry for monitoring physical signs.

In addition, the terminal device in embodiments of this application may alternatively be a terminal device in an IoT system. An IoT is an important part of future development of information technologies. A main technical feature of the IoT is to connect a thing to a network by using a communication technology, to implement an intelligent network for interconnection between a person and a machine or between one thing and another. In embodiments of this application, an IoT technology may implement massive connections, deep coverage, and terminal power saving by using, for example, a narrow band (narrow band, NB) technology.

In addition, in embodiments of this application, the terminal device may further include a sensor, and main functions include collecting data (some terminal devices), receiving control information and downlink data of a network device, sending an electromagnetic wave, and transmitting uplink data to the network device.

A network device in embodiments of this application may be any communication device that has a wireless transceiver function and that is configured to communicate with the terminal device. The device includes but is not limited to an evolved NodeB (evolved NodeB, eNB), a radio network controller (radio network controller, RNC), a NodeB (NodeB, NB), a home base station (home evolved NodeB, HeNB, or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), a 5G system, such as a gNB in an NR system, or a transmission point (TRP or TP), one or a group of antenna panels (including a plurality of antenna panels) of a base station in a 5G system, or a network node that constitutes a gNB or a transmission point, for example, a baseband unit (BBU) or a distributed unit (distributed unit, DU).

In some deployments, the network device in embodiments of this application may be a central unit (central unit, CU) or a distributed unit (distributed unit, DU), or the network device includes a CU and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

Further, the CU may be alternatively divided into a CU-control plane (CU-control plane, CU-CP) and a CU-user plane (CU-user plane, CU-UP). Alternatively, the CU-CP and the CU-UP may be deployed on different physical devices. The CU-CP is responsible for a control plane function, and mainly includes an RRC layer and a PDCP control plane (PDCP-control, PDCP-C) layer. The PDCP-C layer is mainly responsible for data encryption and decryption, integrity protection, data transmission, and the like on a control plane. The CU-UP is responsible for a user plane function, and mainly includes an SDAP layer and a PDCP user plane (PDCP-user, PDCP-U) layer. The SDAP layer is mainly responsible for processing data of a core network and mapping a flow (flow) to a bearer. The PDCP-U layer is mainly responsible for at least one function of encryption and decryption, integrity protection, header compression, serial number maintenance, data transmission, and the like on a data plane. Specifically, the CU-CP and the CU-UP are connected through a communication interface (for example, an E1 interface). The CU-CP represents the network device and is connected to a core network device through a communication interface (for example, an Ng interface), and is connected to the DU through a communication interface (for example, an F1-C (control plane) interface). The CU-UP is connected to the DU through a communication interface (for example, an F1-U (user plane) interface).

In another possible implementation, the PDCP-C layer is also included in the CU-UP.

It may be understood that the foregoing protocol layer division between the CU and the DU, and protocol layer division between the CU-CP and the CU-UP are merely examples, and there may be another division manner. This is not limited in embodiments of this application.

The network device mentioned in embodiments of this application may be a device including the CU or the DU, or a device including the CU and the DU, or a device including a control plane CU node (a CU-CP node), a user plane CU node (a CU-UP node), and the DU node.

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are located are not limited in embodiments of this application.

In embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable device, carrier, or medium. For example, the computer-readable medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable storage media" may include but is not limited to a radio channel, and various other media that can store, include, and/or carry instructions and/or data.

For ease of understanding embodiments of this application, a communication system shown in FIG. 1 is first used as an example to describe in detail a communication system to which embodiments of this application are applicable. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may communicate with one or more of the terminal devices 102 to 107 through a radio link. Each network device may provide communication coverage for a particular geographical area, and may communicate with a terminal device located in the coverage area.

Optionally, the terminal devices may directly communicate with each other. For example, direct communication between the terminal devices may be implemented by using a device to device (device to device, D2D) technology. As shown in FIG. 1, direct communication may be performed between the terminal devices 105 and 106 and between the terminal devices 105 and 107 by using the D2D technology. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 through the terminal device 105.

Each communication device may be configured with a plurality of antennas. For each communication device in the communication system 100, the configured plurality of antennas may include at least one transmit antenna configured to send a signal and at least one receive antenna configured to receive a signal. Therefore, communication devices in the communication system 100 may communicate with each other by using a multi-antenna technology.

It should be understood that FIG. 1 is merely a simplified schematic diagram of an example for ease of understanding. The communication system 100 may further include another network device or another terminal device, which is not shown in FIG. 1. For example, the communication system 100 may further include a core network device. The access network device provides a wireless access connection for the terminal device, and may send data to the terminal device or receive data sent by the terminal device. In addition, the access network device is also connected to the core network device, and may forward data received from the terminal device to the core network, or receive, from the core network, data that needs to be sent to the terminal device.

For ease of understanding embodiments of this application, several basic concepts in embodiments of this application are briefly described. It should be understood that basic concepts described below are briefly described by using a basic concept specified in an NR protocol as an example, but embodiments of this application are not limited to being applied only to an NR system. Therefore, a standard name that appears when the NR system is used as an example for description is a functional description, and a specific name is not limited. The standard name only indicates a function of a device, and may be correspondingly extended to another future system.

### 1. Millimeter-wave frequency band

The millimeter-wave frequency band is generally considered to be an electromagnetic-wave frequency band with a frequency range from 30 GHz to 300 GHz. Compared with a conventional sub-6 GHz frequency band (450 MHz to 6000 MHz), a millimeter wave has wider spectrum resources and can support high data rate transmission. In addition, a wavelength of the millimeter wave is small, so that an antenna size is smaller, and it is more convenient to integrate a plurality of antennas. Therefore, millimeter-wave communication is a key technology in a 5G communication system and a future communication system. However, at the same time, compared with the conventional sub-6 GHz frequency band, channel attenuation of the millimeter-wave frequency band is great, so that a device for communication in the millimeter-wave frequency band needs to use a beamforming technology or another technology, and use a specific spatial domain filtering parameter to enable energy of a signal to be concentrated in a specific direction, namely, a specific beam direction. Therefore, an equivalent channel gain between transceiver devices is improved, and coverage performance and a transmission data rate of millimeter-wave communication are ensured.

### 2. Beam training and beam tracking

In an initial phase in which transceiver devices establish a connection, because information such as a location and a channel between the transceiver devices is usually unknown, the transceiver devices need to perform a beam training process to find a proper beam direction and a spatial domain filtering parameter corresponding to the beam direction. In an existing NR system, a beam training procedure between a base station and a terminal is completed by using a channel state information reporting (Channel state information, CSI-reporting) procedure. A main procedure of the CSI-reporting procedure is as follows: A network device first configures a plurality of channel state information reference signals (Channel state information reference signals, CSI-RSs) for a terminal device, including information such as a time-frequency position, an index, a port quantity, and a port pattern of each CSI-RS. The CSI-RS may be a synchronization signal/physical broadcast channel block (Synchronization signal/Physical broadcast channel block, SSB) or a non-zero-power CSI-RS (Non-zero-power CSI-RS, NZP-CSI-RS). When sending each CSI-RS, the network device may use different spatial domain sending parameters. That is, the network device sends the reference signal in different beam directions. The terminal device receives each CSI-RS configured by the network device, measures a reference signal received power (Reference signal received power, RSRP) or a signal to interference and noise ratio (Signal to interference and noise ratio, SINR), and then reports reference signal indexes of several CSI-RSs with relatively high RSRPs or SINRs and RSRP quantized values corresponding to the reference signal indexes. Alternatively, the terminal device may use different receive beams when receiving and measuring the CSI-RS. To be specific, for each transmit beam of the network device, the terminal device may train an optimal receive beam corresponding to the terminal device, to complete beam pair link (Beam pair link, BPL) training. After the network device receives the information reported by the terminal device, because the network device knows the transmit beam used to send each CSI-RS, the network device can finally determine which beam directions are used to send a signal to enable the terminal device to receive a signal with high energy. In addition, the terminal device can also determine a corresponding receive beam for each transmit beam direction of the network device. Finally, a beam training process is completed.

After a connection is established between the terminal device and the network device, considering that the terminal device is moving and a block may occur between the terminal device and the network device, and consequently, an optimal BPL between the terminal device and the network device may change, to maintain beam alignment between the terminal device and the network device, the network device periodically sends, to the terminal device, the CSI-RSs for beam tracking, and the terminal device correspondingly sends measurement reports of the CSI-RSs for tracking to the network device.

For ease of understanding, a beam training process is described with reference to FIG. 2. FIG. 2 is a diagram of beam training according to this application. It may be learned from FIG. 2 that a network device sends reference signals (an NZP-CSI-RS #1, an NZP-CSI-RS #2, and an NZP-CSI-RS #3 as shown in FIG. 2) in different beam directions. A terminal device receives and measures RSRPs of the reference signals, and then reports a CSI measurement report (for example, reference signal indexes of several CSI-RSs with relatively high RSRPs and RSRP quantized values corresponding to the reference signal indexes are reported). It may be learned from FIG. 2 that the terminal device may also use different receive beams (receive beam #1, receive beam #2, and receive beam #3 as shown in FIG. 2) when receiving and measuring the CSI-RSs.

### 3. Quasi co-location (Quasi co-location, QCL)

QCL in an NR system is defined as follows: Two channels are said to be QCL if a large-scale characteristic of one channel over which a symbol on one antenna port is conveyed can be inferred from a large-scale characteristic of the other channel over which a symbol on the other antenna port is conveyed. The following four QCL parameter types are defined in the NR:
- 'typeA': {Doppler shift, Doppler spread, average delay, delay spread}
- 'typeB': {Doppler shift, Doppler spread}
- 'typeC': {Doppler shift, average delay}
- 'typeD': {spatial domain receive parameter}

Obtaining the Doppler shift may be understood as completing frequency domain synchronization. Obtaining the average delay may be understood as completing time domain synchronization. The Doppler spread and the delay spread may be obtained for channel estimation.

A QCL parameter of the typeD (which may also be referred to as a typeD QCL parameter) indicates that spatial domain receive parameters used by the two antenna ports are the same or similar, and is used to assist a receiving device in determining a receive beam of the receiving device. In this application, unless otherwise specified, a spatial domain receive parameter may also be understood as a receive beam, and a receive beam may also be understood as a space domain receive parameter. Considering that a connection is established based on a BPL in the NR, a QCL relationship of the typeD may also be understood as that spatial domain transmit parameters used by the two antenna ports are the same or similar.

After the network device configures QCL relationships for different reference signals or channels, receiving efficiency of receiving data or a control channel by the terminal device can be improved. For example, when the network device first configures some CSI-RSs for the terminal device, the terminal device may measure and process these CSI-RSs, to obtain one or more of the foregoing QCL parameters. For example, an optimal receive beam (a typeD QCL parameter) of each CSI-RS is determined through receive beam training, and average delay and Doppler shift of each CSI-RS are measured, to determine time-frequency offset synchronization information corresponding to the CSI-RS. In addition, when the CSI-RS is a TRS, the terminal device may further obtain delay spread information and Doppler spread information of the TRS through measurement.

Then, when the network device indicates a demodulation reference signal (Demodulation reference signal, DMRS) of a control resource set (Control Resource Set, CORESET) and a CSI-RS typeD QCL in a beam training process to the terminal device, the terminal device may detect downlink control information (Downlink control information, DCI) on the CORESET by using a receive beam that previously receives the CSI-RS. When the network device configures, for the terminal device, that the network device indicates a DMRS of a CORESET and a CSI-RS typeA QCL to the terminal device, the terminal may receive and detect DCI based on previously obtained time-frequency offset synchronization information. In addition, channel estimation is performed by using the previously obtained delay spread and Doppler spread, and then demodulation and decoding are performed on the DCI.

Specifically, the QCL relationship may be configured and indicated by using a transmission configuration indicator state (Transmission Configuration Indicator state, TCI-state).

For example, one TCI-state includes one downlink reference signal and a QCL relationship type of the reference signal. Alternatively, one TCI-state includes indication information of a first downlink reference signal and a QCL relationship type corresponding to the reference signal, and a second downlink reference signal and a QCL relationship type corresponding to the reference signal. The QCL relationship type corresponding to the first downlink reference signal is typeA, typeB, or typeC, and the QCL relationship type corresponding to the second downlink reference signal is typeD.

### 4. Configuration and beam indication of a control channel

In an NR system, DCI between a network device and a terminal device is carried on a physical downlink control channel (physical downlink control channel, PDCCH). Because the terminal device does not know in advance whether the network device delivers the DCI and a location on which the DCI is specifically sent, the network device determines some candidate periodic time-frequency resource locations by configuring a CORESET and a search space (searchSpace, SS) in advance for the terminal device, and then indicates the terminal device to perform PDCCH blind detection on these locations, to determine whether the network device schedules data transmission, channel state information reporting, and the like of the terminal device.

Information such as a frequency domain position, a quantity of symbols, a resource mapping manner, and a TCI-state of the CORESET is configured in configuration information of the CORESET. The TCI-state indicates a QCL source reference signal (Reference Signal, RS) of a DMRS of a PDCCH on the CORESET, and is used for channel reception and channel estimation of the PDCCH. In a specific implementation process, the configuration information of the CORESET at an RRC layer includes a plurality of TCI-states, and one of the TCI-states is activated at a MAC layer by using a MAC control element (Control element, CE).

When a TCI-state is configured or activated for a CORESET, a receiving device may assist, by using a channel characteristic that is of a reference signal and that is indicated by the TCI-state, channel estimation when PDCCH blind detection is performed on the CORESET, or determine a receive beam used for performing PDCCH blind detection on the CORESET.

Information such as a type of the searchSpace, that is, whether the searchSpace is user-specific or cell-specific, a periodicity of the searchSpace (in a unit of a quantity of slots), an offset in the periodicity, a location of a start symbol in a detection slot, a quantity of candidate physical downlink channels at each aggregation level, and a supported DCI format is configured in configuration information of the searchSpace. Each searchSpace is associated with one CORESET, so that a specific time-frequency position for PDCCH blind detection is determined.

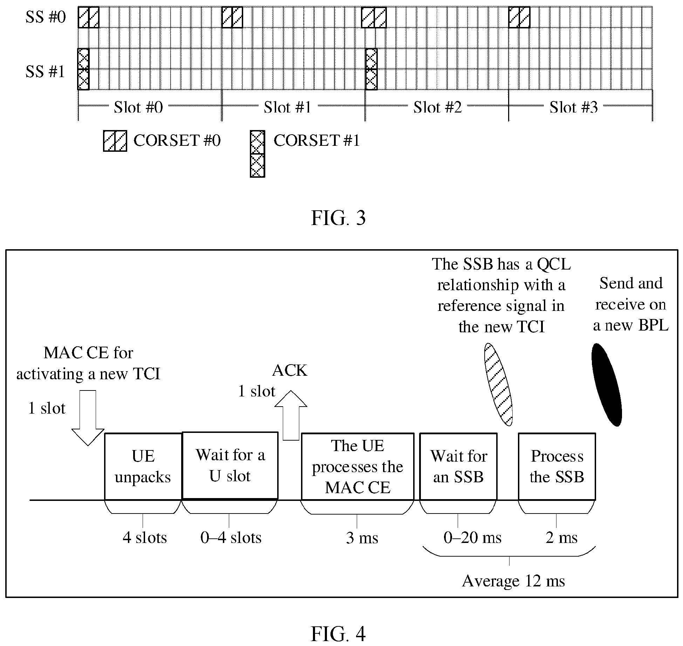

For ease of understanding, a configuration manner of the CORESET and the searchSpace is described with reference to FIG. 3. FIG. 3 is a diagram of configuration of a control resource set CORESET and a search space searchSpace according to this application. It may be learned from FIG. 3 that the network device configures two CORESETs (a CORESET #0 and a CORESET #1 shown in FIG. 3) for the terminal device, where the CORESET #0 occupies two symbols, and occupies 12 PRBs in frequency domain; and the CORESET #1 occupies one symbol, and occupies 24 PRBs in frequency domain. In addition, the network device further configures two searchSpaces (an SS #0 and an SS #1 shown in FIG. 3) for the terminal device, where the SS #0 is associated with the CORESET #0, a periodicity is one slot (slot), and a start symbol appears in a symbol 0 in a corresponding slot; and the SS #1 is associated with the CORESET#1, a periodicity is two slots, and a start symbol appears in a symbol 0 in a corresponding slot.

### 5. Data channel beam configuration

Data at a physical layer in an NR system is usually carried on a physical downlink shared channel (Physical downlink shared channel, PDSCH), and is usually scheduled by using DCI. The DCI may include time-frequency position indication information of the PDSCH and receive beam indication information of the PDSCH. A specific indication procedure is as follows.

First, a network device configures, for a terminal device by using RRC layer signaling, a plurality of available TCI-states for the PDSCH.

Then, the network device activates several TCI-states by using a MAC CE.

When the network device schedules the PDSCH by using DCI, the DCI may include a TCI codepoint (codepoint) field, and there is a one-to-one correspondence between different values of the TCI codepoint field and the activated TCI-states. Therefore, the network device may indicate, to the terminal device by using a TCI codepoint in the DCI, a receive beam that should be used by the scheduled PDSCH.

The indication method mainly has the following advantages: First, considering that a payload (payload) in the DCI is limited, a size of a set of the available TCI-states is reduced after the TCI-states are activated by using the MAC CE, and therefore indication overheads of the TCI codepoint are also reduced. Second, the terminal device may maintain only channel information corresponding to the TCI-states that are activated by the MAC CE, thereby reducing implementation complexity of the terminal device.

### 6. Beam configuration update

When a terminal device moves, a block occurs between the terminal device and a network device, or a surrounding scatterer environment changes, an optimal BPL of the terminal device and the network device changes, and the terminal device notifies the network device of the change of the optimal beam through CSI reporting. When the network device receives the reported information, a TCI-state of a CORESET of the terminal device needs to be reconfigured, or a new activated TCI-state needs to be added to a PDSCH, so that the network device and the terminal device send and receive control information or data information on a new BPL.

For ease of understanding, a procedure of beam configuration update is described with reference to FIG. 4. FIG. 4 is a diagram of beam configuration update according to this application. It may be learned from FIG. 4 that the procedure of beam configuration update includes the following steps.

First, the network device sends a MAC CE to the terminal device for activating a new TCI-state.

Then, the terminal device demodulates and decodes the MAC CE, and provides an acknowledgement (Acknowledgement, ACK). In addition, the terminal device needs to process and parse specific information about the MAC CE, to indicate to each layer protocol stack that the network device may send a subsequent signal by using the new TCI-state.

However, an SSB still needs to be waited for before the actual use of the new TCI-state, and the SSB is processed. There is a typeA QCL relationship or a typeC QCL relationship between one reference signal in the new TCI-state and the SSB. For example, the TCI-state may include one reference signal or two reference signals. There is a typeA QCL relationship or a typeC QCL relationship between the SSB and one reference signal in the new TCI-state, because in different beam directions, signals received by the terminal device have different propagation paths in space. Therefore, in a new beam direction, the terminal device needs to perform time-frequency synchronization again (that is, calculate average delay and average Doppler shift) in the new beam direction.

In addition, to facilitate understanding of embodiments of this application, the following several descriptions are provided.

First, in this application, "indicate" may include "directly indicate" and "indirectly indicate". When a piece of indication information is described as indicating A, the indication information may directly indicate A or indirectly indicate A, but it does not necessarily mean that the indication information includes A.

Information indicated by the indication information is referred to as to-be-indicated information. In a specific implementation process, there are a plurality of manners of indicating the to-be-indicated information, for example, but not limited to, a manner of directly indicating the to-be-indicated information. For example, the to-be-indicated information is indicated by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating same information. For example, a person skilled in the art should understand that a precoding matrix includes precoding vectors, and the precoding vectors in the precoding matrix may have a same part in terms of composition or other attributes.

Furthermore, specific indication manners may alternatively be various existing indication manners, for example, but not limited to, the foregoing indication manners and various combinations thereof. For details of the various indication manners, refer to the conventional technology. Details are not described in this specification. It may be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

In addition, there may be another equivalent form for the to-be-indicated information. For example, a row vector may be represented as a column vector, and a matrix may be represented by using a transposed matrix of the matrix. Alternatively, a matrix may be represented in a form of a vector or an array, and the vector or array may be obtained by connecting row vectors or column vectors in the matrix, or the like. It should be understood that the technical solutions provided in embodiments of this application cover various forms. For example, some or all features in embodiments of this application should be understood as covering various representation forms of the features.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit device by sending configuration information to a receive device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (control element, CE). The physical layer signaling includes, for example, DCI.

Second, "first", "second", and various numerical numbers (for example, "#1" and "#2") in this application are merely differentiated for ease of description, but are not intended to limit the scope of embodiments of this application. For example, different information is distinguished.

Third, in this application, "preset" may include "indicated by a network device by using signaling" or "predefined", for example, "defined in a protocol". The "predefined" may be implemented by pre-storing, in a device (for example, a terminal device and a network device), corresponding code or a corresponding table; or may be implemented in another manner that may be used to indicate related information. A specific implementation is not limited in this application.

Fourth, "stored" in embodiments of this application may be "stored in one or more memories". The one or more memories may be separately disposed, or may be integrated into an encoder or a decoder, a processor, or a communication apparatus. Alternatively, some of the one or more memories may be separately disposed, and some of the one or more memories are integrated into the decoder, the processor, or the communication apparatus. A type of the memory may be a storage medium in any form. This is not limited in this application.

Fifth, the "protocol" in embodiments of this application may be a standard protocol in the communication field, for example, may include an LTE protocol, an NR protocol, and a related protocol applied to a future communication system. This is not limited in this application.

Sixth, in embodiments of this application, control channels may include other physical layer control channels such as a PUCCH and an enhanced physical uplink control channel (enhanced physical uplink control channel, EPUCCH). However, for ease of description, the following terms or concepts are merely described by using a PUCCH as an example. However, embodiments of this application are not limited thereto.

It should be understood that, in embodiments of this application, a description is provided by using an example in which an uplink control channel is a physical uplink control channel PUCCH, but this does not constitute a limitation on embodiments of this application. Actually, the uplink control channel may also be defined as another term or concept, which is applicable to technical solutions in embodiments of this application. In embodiments of this application, the uplink control channel and the PUCCH may be used alternately. It may be considered that the PUCCH is an example description of the uplink control channel.

Seventh, in embodiments of this application, terms and English abbreviations such as downlink control information (DCI), a media access control control element (MAC-CE), radio resource control (RRC), a physical downlink control channel (PDCCH), a physical downlink shared channel (PDSCH), a control resource set (CORESET), a channel state information reference signal (CSI-RS), a sounding reference signal (SRS), a synchronization signal/physical broadcast channel (SS/PBCH), a synchronization signal block (SSB), a transmission configuration indicator state (TCI-state), and the like are examples provided for ease of description, and should not constitute any limitation on this application. This application does not exclude a possibility of defining another term that can implement a same or similar function in an existing or future protocol.

Eighth, the term "and/or" in this specification describes only an association relationship between associated objects, and indicates that three relationships may exist. For example, A and/or B may indicate the following three cases: Only A exists, both A and B exist, and only B exists. In addition, the character "/" in this specification generally indicates an "or" relationship between the associated objects.

Ninth, a moment of receiving a piece of information in this specification may be understood as a moment of starting to receive the information, or may be understood as a moment of completing receiving the information.

With reference to FIG. 1, the foregoing briefly describes a scenario to which the communication method provided in embodiments of this application can be applied, and describes basic concepts that may be used in embodiments of this application. The following describes the communication method provided in embodiments of this application in detail with reference to the accompanying drawings.

It may be learned from the foregoing beam configuration update that, after the MAC CE for activating the new TCI-state is sent, the terminal device may need to wait for a long time before actually receiving control information and/or data information in a beam direction indicated by the new TCI-state. This affects an actual data transmission rate of the terminal device.

It should be noted that, before the new TCI-state is activated, the terminal device generally measures and reports a corresponding CSI-RS. Therefore, when measuring the CSI-RS, the terminal device has obtained some typeC QCL information corresponding to the CSI-RS. A method for beam configuration update is as follows: The terminal device records typeC QCL information of the reference signal (for example, the network device configures the terminal device to record and maintain the information for a period of time). After the network device activates the new TCI-state, the terminal device actually still has the time-frequency offset synchronization information of the beam. Therefore, the terminal device does not need to additionally wait for an SSB.

However, the method for beam configuration update may have the following problems.
(1) Resolution of a frequency offset is usually determined by a length of measurement time. A longer length of the measurement time indicates higher resolution of the frequency offset. However, one port of a CSI-RS for beam training usually occupies only one symbol in one slot. Accuracy of an obtained typeC QCL parameter is low.
(2) Generally, the terminal device can obtain only typeC QCL parameters and typeD QCL parameters corresponding to the reference signal by measuring the CSI-RS used for beam training, and cannot obtain a typeA QCL parameter. However, the typeA QCL parameter is very important to channel estimation. When the terminal device does not have the typeA parameter, accuracy of channel estimation performed by the terminal device is reduced, and accuracy of demodulating and decoding a control channel or a data channel by the terminal device may be affected. Equivalently, the network device may wait until the terminal device subsequently receives a tracking reference signal (Tracking reference signal, TRS) before using a new beam to send control information and data information to the terminal device. This causes a long latency.

Embodiments of this application provide a communication method. When reporting channel state information, a terminal device synchronously reports whether QCL parameters of some reference signals are included, so that a network device can learn of a status of QCL parameters of reference signals stored in the terminal device. Further, when an effective moment of an activated new TCI-state is determined based on information about the QCL parameters, efficiency of activating the new TCI-state can be improved.

It should be understood that the communication method provided in embodiments of this application may be applied to a system in which communication is performed by using a multi-antenna technology, for example, the communication system 100 shown in FIG. 1. The communication system may include at least one network device and at least one terminal device. The network device may communicate with the terminal device by using a multi-antenna technology.

It should be further understood that, a specific structure of an execution body of the method provided in embodiments of this application is not specifically limited in embodiments shown below, provided that a program that records code of the method provided in embodiments of this application can be run to perform communication according to the method provided in embodiments of this application. For example, the method provided in embodiments of this application may be performed by a terminal device or a network device, or a functional module that is in the terminal device or the network device and that can invoke and execute the program.

The following describes in detail the communication method provided in embodiments of this application by using interaction between the network device and the terminal device as an example.

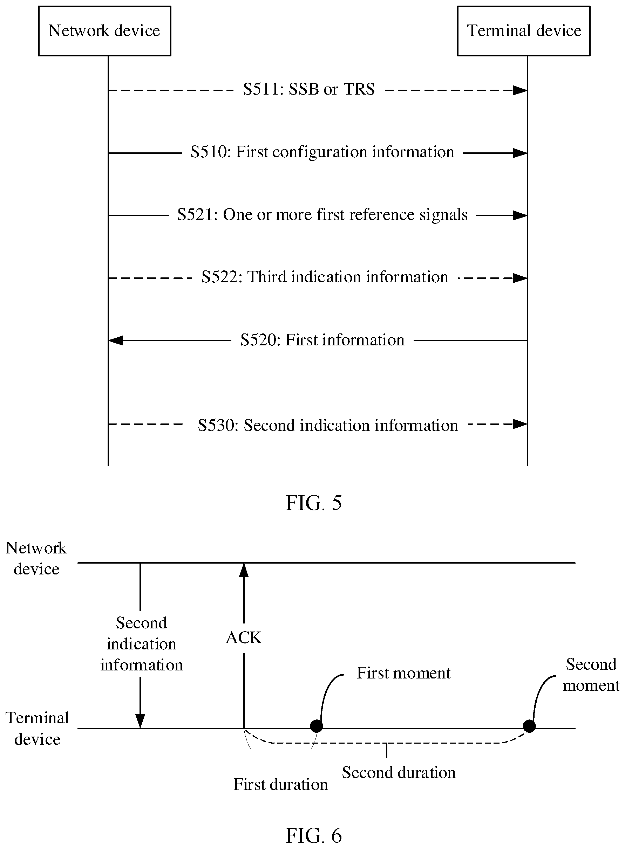

FIG. 5 is a schematic flowchart of a communication method according to this application. The method includes the following steps.

S510: A network device sends first configuration information to a terminal device, or a terminal device receives first configuration information from a network device.

The first configuration information indicates the terminal device to report channel state information, and the first configuration information includes identifiers of one or more first reference signals.

That the identifier of the first reference signal identifies the first reference signal includes but is not limited to an index of the first reference signal, an identifier of the first reference signal, and the like. A specific form of the identifier of the first reference signal is not limited in this application as long as the identifier can indicate the first reference signal.

That the first configuration information indicates the terminal device to report channel state information may be: The first configuration information indicates the terminal device to measure and report RSRP values or SINR values of the one or more first reference signals. Reporting the RSRP value or the SINR value of the first reference signal may be: reporting a quantized value of an RSRP or an SINR of the first reference signal.

The first reference signal includes a CSI-RS. For example, the first reference signal may be an NZP-CSI-RS. It should be understood that the first reference signal may alternatively be another reference signal that can implement a function of the channel state information reference signal. This is not limited in this application.

In a possible implementation, the first reference signal may be configured to have a typeA QCL relationship or a typeC QCL relationship with an SSB and/or a TRS (for ease of description, the TRS is used as an example below for description). That is, the first reference signal and the TRS have same or similar average delay and Doppler shift.

In another possible implementation, the first reference signal may be configured to have a typeD QCL relationship with the TRS. That is, the first reference signal and the TRS have a same or similar spatial transmit/receive parameter.

Because the TRS may occupy a plurality of symbols in one slot, when a QCL parameter corresponding to the TRS is measured for the TRS, a length of measurement time is longer than that of a CSI-RS for beam training. Therefore, accuracy of the measured QCL parameter can be improved. When the first reference signal is configured to have a QCL relationship with the TRS, for a QCL parameter of the first reference signal, reference may be made to a QCL parameter of the TRS, and accuracy is also high.

For example, the network device configures a plurality of TRSs (such as a TRS #1, a TRS #2, and a TRS #3) for the terminal device. The network device configures a plurality of first reference signals (such as an NZP-CSI-RS #1, an NZP-CSI-RS #2, and an NZP-CSI-RS #3) for the terminal device. The network device configures, for the terminal device, that the NZP-CSI-RS #1 has a typeA QCL relationship and a typeD QCL relationship with the TRS #1, the NZP-CSI-RS #2 has a typeA QCL relationship and a typeD QCL relationship with the TRS #2, and the NZP-CSI-RS #3 has a typeA QCL relationship and a typeD QCL relationship with the TRS #3.

In another possible implementation, the first reference signal may be configured to indirectly have a QCL relationship with the TRS. That is, the first reference signal and the TRS have same or similar average delay and Doppler shift, and a same or similar spatial transmit/receive parameter.

For example, the network device configures a plurality of TRSs (such as a TRS #1, a TRS #2, and a TRS #3) for the terminal device. The network device configures a plurality of first reference signals (such as an NZP-CSI-RS #1, an NZP-CSI-RS #2, and an NZP-CSI-RS #3) for the terminal device. The network device configures, for the terminal device, that the NZP-CSI-RS #1 has a QCL relationship with an NZP-CSI-RS #4, the NZP-CSI-RS #2 has a QCL relationship with an NZP-CSI-RS #5, and the NZP-CSI-RS #3 has a QCL relationship with an NZP-CSI-RS #6. In addition, the network device configures, for the terminal device, that the NZP-CSI-RS #4, the NZP-CSI-RS #5, and the NZP-CSI-RS #6 have a QCL relationship with the TRS #1, the TRS #2, and the TRS #3 respectively. It may be considered that the NZP-CSI-RS #1, the NZP-CSI-RS #2, and the NZP-CSI-RS #3 indirectly have a QCL relationship with the TRS #1, the TRS #2, and the TRS #3 respectively.

When it is mentioned again that there is an indirect QCL relationship below, reference may be made to the descriptions of the indirect QCL relationship herein. That is, when it is mentioned that there is a QCL relationship, the QCL relationship may be a direct QCL relationship or an indirect QCL relationship. Details of a definition of the indirect QCL relationship are not described below.

In the foregoing two possible implementations, it may be understood that the terminal device may further receive an SSB (or a TRS), and obtain a QCL parameter of the SSB. A method procedure shown in FIG. 5 may include the following step.

S511: The network device sends an SSB (or a TRS) to the terminal device, or the terminal device receives an SSB (or a TRS) from the network device.

Specifically, the network device may send the SSB (or TRS) based on a time-frequency position of the SSB (or TRS). The terminal device may receive the SSB (or TRS). The SSB (or TRS) occupies a plurality of symbols in one slot. The TRS is used by the terminal device to perform time-frequency offset synchronization, and may further be used by the terminal device to estimate delay spread and Doppler spread (or frequency spread) of a channel.

In an implementation, the SSB (or TRS) is periodic.

In an implementation, the network device may send SSBs (or TRSs) in a plurality of beam directions. The plurality of beam directions may include beam directions that are being used by the network device and the terminal device for a control channel and a data channel, or may include some other alternate beam directions.

For example, these alternate beam directions may be beam directions that are being used by another terminal device.

For example, the network device sends the SSBs (or TRSs) in a beam direction #1, a beam direction #2, and a beam direction #3. The beam direction #1 and the beam direction #2 are beam directions that are being used by the network device and the terminal device for the control channel and the data channel. The beam direction #3 is a beam direction that is being used by the network device and another terminal device for the control channel and the data channel.

For example, after receiving the SSBs (or TRSs), the terminal device may obtain typeA QCL parameters or typeC QCL parameters of these SSBs (or TRSs).

Specifically, that the terminal device obtains the typeA QCL parameters may be understood as that the terminal device obtains average delay information, Doppler shift information, delay spread information, and Doppler spread information of an antenna port corresponding to the reference signal. That the terminal device obtains the typeC QCL parameters may be understood as that the terminal device obtains average delay information and Doppler shift information of an antenna port corresponding to the reference signal. That the terminal device obtains the average delay information may be understood as that the terminal device completes time domain synchronization with the corresponding antenna port. That the terminal device obtains the Doppler shift information may be understood as that the terminal device completes frequency domain synchronization with the corresponding antenna port.

Further, the network device may send the first reference signal to the terminal device based on the first configuration information. The method procedure shown in FIG. 5 further includes the following step.

S521: The network device sends one or more first reference signals to the terminal device, or the terminal device receives one or more first reference signals from the network device.

The network device may send the one or more first reference signals to the terminal based on the configuration in S510.

For example, for each first reference signal, a transmit beam/spatial transmit parameter used by the network device may be the same as a transmit beam/spatial transmit parameter for transmitting an SSB (or a TRS) that has a QCL relationship with the first reference signal, or similar to a transmit beam/spatial transmit parameter for transmitting an SSB (or a TRS) that has a QCL relationship with the first reference signal. In this way, it may be ensured that the first reference signal has a typeD QCL relationship and a typeA QCL relationship with the SSB (or TRS).

Further, the terminal device reports channel state information to the network device. The method procedure shown in FIG. 5 further includes the following step.

S520: The terminal device sends first information to the network device, or the network device receives first information from the terminal device.

The first information includes channel state information of at least one second reference signal, and the at least one second reference signal is a part or all of the one or more first reference signals, or the at least one second reference signal belongs to the one or more first reference signals, or the one or more first reference signals include the at least one second reference signal. Specifically, the terminal device reports a beam measurement result, and the first information (which may be referred to as a measurement report) includes an identifier of a reference signal for beam measurement and a corresponding RSRP quantized value.

In this embodiment, the first information further includes first indication information, and the first indication information indicates whether the terminal device stores a quasi co-location QCL parameter (which may be referred to as a first QCL parameter for ease of differentiation) of the at least one second reference signal.

For example, a possible implementation of that the first indication information indicates whether the terminal device stores the first QCL parameter of the at least one second reference signal is as follows: The first indication information indicates whether the terminal device stores a second QCL parameter of at least one third reference signal of the at least one second reference signal.

When the first indication information indicates that the terminal device stores the second QCL parameter of the at least one third reference signal of the at least one second reference signal, the first information further includes an identifier of the at least one third reference signal.

Further, the network device may further indicate, by using third indication information, the terminal device to report a type of the second QCL parameter. The method procedure shown in FIG. 5 further includes the following step.

S522: The network device sends third indication information to the terminal device, or the terminal device receives third indication information from the network device.

The third indication information indicates the terminal device to report a type of the second QCL parameter.

In this case, the first information further includes indication information indicating the type of the second QCL parameter that is of the at least one third reference signal and that is obtained by the terminal device. For example, the first information further includes fourth indication information. The fourth indication information indicates the type of the second QCL parameter of the at least one third reference signal.

Optionally, the type that is of the second QCL parameter and that is reported by the terminal device includes a typeA or a typeC. In addition, alternatively, the type that is of the second QCL parameter and that is reported by the terminal device may be implemented as follows: A QCL parameter of a specific type is reported to indirectly report a type of the QCL parameter. For example, that the terminal device reports a typeAmay be implemented by reporting a second QCL parameter of the typeA (or referred to as a typeA QCL parameter or the like). Alternatively, for another example, that the terminal device reports a typeC of the second QCL parameter may be implemented by reporting a QCL parameter of the typeC (or a typeC QCL parameter or the like).

Optionally, the third indication information is carried in the first configuration information.

Optionally, for an NZP-CSI-RS, the terminal device may further additionally indicate, to the network device, whether the terminal device has a typeA QCL parameter or a typeC QCL parameter of the NZP-CSI-RS. The typeA QCL parameter may be obtained by the terminal device by using an SSB (or a TRS) that has a typeA QCL relationship with the NZP-CSI-RS. Alternatively, the typeC QCL parameter may be obtained by the terminal device by using an SSB (or a TRS) that has a typeC QCL relationship with the NZP-CSI-RS.

For ease of understanding, how to indicate that the terminal device stores the second QCL parameter of the at least one third reference signal and the type of the second QCL parameter is described with reference to specific examples.

For example, three NZP-CSI-RSs that are configured by the network device for the terminal device for beam training have a typeA QCL relationship, a typeD QCL relationship, or an indirect QCL relationship with three TRSs respectively. If the terminal device has received a TRS 1 and a TRS 2, and recorded QCL parameters of the TRS 1 and the TRS 2, then if the terminal device has reported an index and an RSRP, the terminal device may further report, to the network device, that the terminal device has measured a QCL parameter of an antenna port corresponding to an NZP-CSI-RS 1. Further, the terminal device may further report, to the network device, whether the QCL parameter measured by the terminal device is a typeA QCL parameter or a typeC QCL parameter. Optionally, the terminal device may further report, to the network device, that the terminal device does not measure a QCL parameter of a TRS 3, or not perform any indication.

In a possible implementation, when the network device determines that a new TCI state needs to be activated, the method procedure shown in FIG. 5 further includes the following step.

S530: The network device sends second indication information to the terminal device, or the terminal device receives second indication information from the network device.

The second indication information indicates to activate a TCI-state. For example, the second indication information includes a MAC CE or DCI. It should be understood that a specific form of the second indication information is not limited in this application, and all information that can be used to indicate to activate the TCI-state falls within the protection scope of this application.

When a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment.

The reference signal corresponding to the TCI-state may be understood as a first reference signal included in the TCI-state, a second reference signal included in the TCI-state, or any reference signal included in the TCI-state.

The first condition includes that the fourth reference signal is one of the at least one third reference signal, or the fourth reference signal meets a QCL relationship with one of the at least one third reference signal, where the QCL relationship may be a direct QCL relationship or an indirect QCL relationship.

It may be learned from the foregoing descriptions that the third reference signal is a reference signal reported by the terminal device. When reporting a related measurement value of the third reference signal, the terminal device reports that the terminal device has a typeA QCL parameter or a typeC QCL parameter of the third reference signal.

For example, when the effective moment of the TCI-state is determined, the following condition further needs to be met: Duration between a third moment and a fourth moment is less than or equal to a first threshold. The third moment is a moment at which the terminal device receives the second indication information or a moment at which the terminal device provides an acknowledgement ACK for the second indication information. The fourth moment is a moment at which the terminal device sends the first information or a moment at which the network device provides an acknowledgement ACK for the first information.

The first threshold may be predefined in a protocol, or may be determined by the terminal device and the network device through negotiation. A value and a determining manner of the first threshold are not limited in this application.

For example, the first moment is a moment at which first duration (such as 3 ms) elapses from a moment at which the second indication information is received (or a moment at which the terminal device provides an acknowledgement ACK for the second indication information), the second moment is a moment at which second duration (such as 20 ms) elapses from the moment at which the second indication information is received (or the moment at which the terminal device provides the acknowledgement ACK for the second indication information), and the second duration is greater than or equal to a sum of the first duration, duration of waiting for a synchronization signal block SSB or a tracking reference signal TRS, and third duration. The SSB or the TRS has a typeA QCL relationship or a typeC QCL relationship with one reference signal (for example, the fourth reference signal) in the TCI-state. Alternatively, the SSB or the TRS has an indirect typeA QCL relationship or an indirect typeC QCL relationship with one reference signal in the TCI-state. Optionally, the first duration and the second duration may be configured or preconfigured. The third duration may be duration for processing the SSB or the TRS.

For ease of understanding, a relationship between the first moment and the second moment is described with reference to FIG. 6. FIG. 6 is a diagram of a first moment and a second moment according to this application.

It may be learned from FIG. 6 that the first moment is a moment at which first duration (such as 3 ms) elapses from a moment at which the terminal device provides an acknowledgement ACK for the second indication information, and the second moment is a moment at which second duration (such as 20 ms) elapses from the moment at which the terminal device provides the acknowledgement ACK for the second indication information.

It should be understood that FIG. 6 is merely an example, and does not constitute any limitation on the protection scope of this application.

When the effective moment of the TCI-state is the first moment, a time for waiting for a reference signal for synchronization after the new TCI-state is activated may be reduced.

In a possible implementation, that the fourth reference signal meets a QCL relationship with one of the at least one third reference signal is: The fourth reference signal meets a typeA QCL relationship with one of the at least one third reference signal. The typeA QCL relationship includes that a channel over which an antenna port conveys the fourth reference signal and a channel over which an antenna port conveys the third reference signal have common Doppler shift, Doppler spread, average delay, and delay spread.

In this implementation, it may be understood that when obtaining typeA QCL parameters of the fourth reference signal, the terminal device may use the TCI-state at the first moment. Because the typeA QCL parameters include more types of channel large-scale characteristics than typeC QCL parameters, the terminal device can perform channel estimation more accurately when having the typeA QCL parameters. This improves reliability of transmitting data by the terminal device by using the new TCI-state.

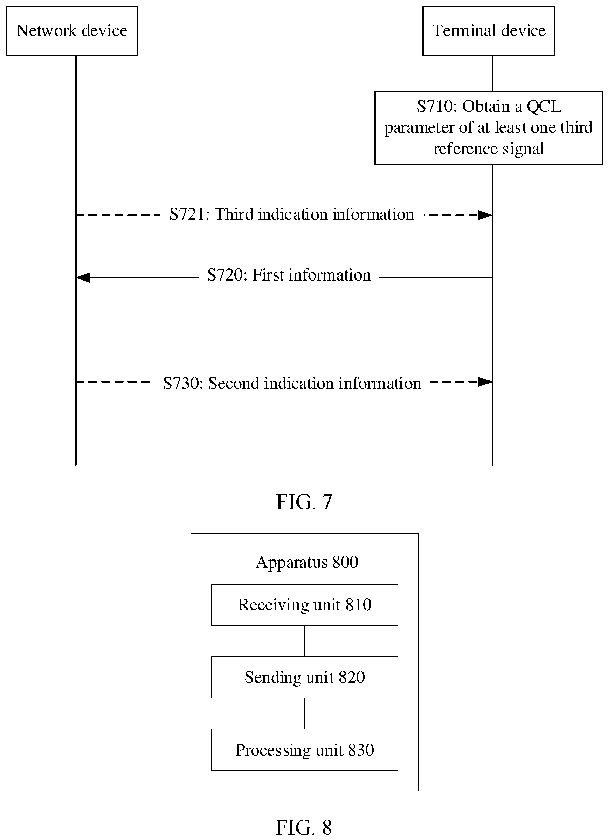

The method procedure shown in FIG. 5 indicates that the terminal device may notify, by using a channel measurement report reporting procedure, the network device whether the terminal device stores QCL parameters of some reference signals. It should be understood that the terminal device may perform reporting in another manner. For example, before or after the network device activates the new TCI-state, the terminal device may report, to the network device by using a newly added message, that QCL parameters of some reference signals are stored, and notify, by using separate signaling, the network device of reference signals monitored by the terminal device. Decoupling of CSI-RS reporting improves flexibility of signaling exchange. This is described below with reference to FIG. 7.

FIG. 7 is a schematic flowchart of another communication method according to this application. The communication method includes the following steps.

S710: A terminal device obtains a second QCL parameter of at least one third reference signal.

Optionally, the third reference signal is an SSB (or a TRS) used by the terminal device to monitor and record the second QCL parameter.

It may be understood that, after receiving the SSB (or TRS), the terminal device may obtain typeA QCL parameters or typeC QCL parameters of the SSB (or TRS). In this case, step S710 may be understood as: A network device sends an SSB (or a TRS) to the terminal device, and after receiving the SSB (or TRS), the terminal device may obtain the second QCL parameter of the at least one third reference signal.

In this embodiment, the terminal device may report, to the network device by using first information, that the second QCL parameter of the at least one third reference signal is stored. A method procedure shown in FIG. 7 further includes the following step.

S720: The terminal device sends first information to the network device, or the network device receives first information from the terminal device.

The first information includes an identifier of the at least one third reference signal, and the first information indicates that the terminal device stores the second QCL parameter of the at least one third reference signal.

In a possible implementation, reporting, by the terminal device, the first information may be performed in parallel with a process of reporting a channel state measurement report.

In another possible implementation, reporting, by the terminal device, the first information may be irrelevant to a process of reporting a channel state measurement report.

For example, the terminal device predicts, based on historical information, which beams are more likely to become a new beam. Therefore, the terminal device may use corresponding SSBs or TRSs to complete synchronization in these beam directions in advance, and report indexes of these SSBs and TRSs to the network device.

In still another possible implementation, reporting, by the terminal device, the first information may be performed based on a reporting result of a channel state measurement report.

For example, after reporting several reference signals with relatively high RSRPs, the terminal device may track TRSs and SSBs that have a QCL relationship with these reference signals in advance, and then report indexes of these TRSs and SSBs to the network device. In this way, synchronization of the terminal device in these beam directions can be started in advance, instead of starting synchronization of the terminal device only after these beams are activated by using the TCI-state.

In addition, the reporting behavior of the first information may be periodic, or may be aperiodic. In addition, when the terminal device no longer tracks some reference signals, that is, does not maintain synchronization in some beam directions, the terminal device may also report the information to the network device, to notify the network device that the terminal device no longer maintains synchronization information in the beam directions.

Further, the network device may further indicate, by using third indication information, the terminal device to report a type of the second QCL parameter. The method procedure shown in FIG. 7 further includes the following step.

S721: The network device sends third indication information to the terminal device, or the terminal device receives third indication information from the network device.

Reference may be made to the descriptions of S522 in FIG. 5. Details are not described herein again.

In a possible implementation, when the network device determines that a new TCI state needs to be activated, the method procedure shown in FIG. 7 further includes the following step.

S730: The network device sends second indication information to the terminal device, or the terminal device receives second indication information from the network device.

The second indication information indicates to activate a TCI-state. For example, the second indication information is a MAC CE or DCI. It should be understood that a specific form of the second indication information is not limited in this application, and all information that can be used to indicate to activate the TCI-state falls within the protection scope of this application.

For example, based on a sequence relationship between step S730 and step S720, the determining an effective moment of the TCI-state includes the following two possibilities.

Possibility 1: Step S720 is performed before step S730.

Under the possibility 1, when a fourth reference signal corresponding to the TCI-state meets a first condition, an effective moment of the TCI-state is a first moment; or when a fourth reference signal corresponding to the TCI-state does not meet a first condition, an effective moment of the TCI-state is a second moment.

The first condition includes that the fourth reference signal is one of the at least one third reference signal, or the fourth reference signal meets a QCL relationship with one of the at least one third reference signal, where the QCL relationship may be a direct QCL relationship or an indirect QCL relationship.

In a possible implementation, that the fourth reference signal meets a QCL relationship with one of the at least one third reference signal is: The fourth reference signal meets a typeA QCL relationship with one of the at least one third reference signal. The typeA QCL relationship includes that a channel over which an antenna port conveys the fourth reference signal and a channel over which an antenna port conveys the third reference signal have common Doppler shift, Doppler spread, average delay, and delay spread.

In this implementation, it may be understood that when obtaining typeA QCL parameters of the fourth reference signal, the terminal device may use the TCI-state at the first moment. Because the typeA QCL parameters include more types of channel large-scale characteristics than typeC QCL parameters, the terminal device can perform channel estimation more accurately when having the typeA QCL parameters. This improves reliability of transmitting data by the terminal device by using the new TCI-state.

It may be learned from the foregoing descriptions that the third reference signal is a reference signal reported by the terminal device. The terminal device reports, by using first indication information, that the terminal device has the second QCL parameter of the third reference signal, and further reports the type of the second QCL parameter by using fourth indication information. For example, the reported type of the second QCL parameter includes a typeA or a typeC. When the reported type of the second QCL parameter includes the typeA, it may be understood that the terminal device has a typeA QCL parameter of the third reference signal. When the reported type of the second QCL parameter includes the typeC, it may be understood that the terminal device has a typeC QCL parameter of the third reference signal.

Specifically, for definitions of the first moment and the second moment, refer to the descriptions of the first moment and the second moment in step S530 in FIG. 5. Details are not described herein again.

For example, duration between a third moment and a fourth moment is less than or equal to a first threshold. Specifically, for definitions of the third moment and the fourth moment, refer to the descriptions of the third moment and the fourth moment in step S530 in FIG. 5. Details are not described herein again.

Possibility 2: Step S720 is performed after step S730.

To be specific, before receiving the second indication information for activating the TCI-state, the terminal device does not report a reference signal of which a QCL parameter is stored. Instead, after receiving the second indication information, the terminal device reports that a QCL parameter of the fourth reference signal corresponding to the TCI-state is stored. This may be understood as: When the at least one third reference signal includes a fourth reference signal corresponding to the TCI-state, an effective moment of the TCI-state is a moment at which first duration elapses after the first information is sent (or an ACK of the network device for the first information is received).

Under the possibility 2, the terminal device directly indicates, to the network device, the QCL parameter of the fourth reference signal corresponding to the to-be-activated TCI-state, so that a rule and a correspondence are simpler.

It should be understood that sequence numbers of the foregoing processes do not mean execution sequences. The execution sequences of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device (for example, a network device or a terminal device) in an existing network architecture is mainly used as an example for description. It should be understood that a specific form of the device is not limited in embodiments of this application. For example, all devices that can implement a same function in the future are applicable to embodiments of this application.

It may be understood that in the foregoing method embodiments, a method and an operation implemented by a device (for example, a network device or a terminal device) may alternatively be implemented by a component (for example, a chip or a circuit) of the device.

The communication method provided in embodiments of this application is described in detail above with reference to FIG. 5 and FIG. 7. The foregoing communication method is mainly described from a perspective of interaction between a network device and a terminal device. It may be understood that to implement the foregoing functions, the network device and the terminal device include corresponding hardware structures and/or software modules for implementing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

A communication apparatus provided in this application is described in detail below with reference to FIG. 8 to FIG. 11. It should be understood that descriptions of apparatus embodiments correspond to the descriptions of the method embodiments. Therefore, for content that is not described in detail, refer to the foregoing method embodiments. For brevity, some content is not described again.

In embodiments of this application, a transmit device or a receive device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logical function division. In actual implementation, another division manner may be used. An example in which each functional module is obtained through division based on each corresponding function is used below for description.

FIG. 8 is a diagram of a communication apparatus according to this application. As shown in FIG. 8, the apparatus 800 includes a receiving unit 810, a sending unit 820, and a processing unit 830.

In an example, the receiving unit 810 is configured to receive first configuration information from a network device, where the first configuration information indicates the terminal device to report channel state information, and the first configuration information includes identifiers of one or more first reference signals.

The sending unit 820 is configured to send first information to the network device, where the first information includes channel state information of at least one second reference signal, and the at least one second reference signal is a part or all of the one or more first reference signals.

The first information includes first indication information, and the first indication information indicates whether the communication apparatus stores a first quasi co-location QCL parameter of the at least one second reference signal.

In another example, the processing unit 830 is configured to obtain a second quasi co-location QCL parameter of at least one third reference signal.

The sending unit 820 is configured to send the first information to the network device, where the first information includes an identifier of the at least one third reference signal, and the first information indicates that the terminal device stores the second QCL parameter of the at least one third reference signal.

The apparatus 800 corresponds to the terminal device in the method embodiments. The apparatus 800 may be the terminal device in the method embodiments, or a chip or a functional module in the terminal device in the method embodiments. A corresponding unit of the apparatus 800 is configured to perform corresponding steps performed by the terminal device in the method embodiments shown in FIG. 5 and FIG. 7.

The processing unit 830 in the apparatus 800 is configured to perform processing-related steps corresponding to the terminal device in the method embodiments. For example, step S710 in FIG. 7 is performed.

The receiving unit 810 in the apparatus 800 is configured to perform a receiving step of the terminal device in the method embodiments. For example, steps S511, S510, S521, S522, and S530 in FIG. 5 are performed, or step S721 in FIG. 7 is performed.

The sending unit 820 in the apparatus 800 is configured to perform a sending step of the terminal device in the method embodiments. For example, step S520 in FIG. 5 or step S720 in FIG. 7 is performed.

The processing unit 830 may be at least one processor. The sending unit 820 may be a transmitter or an interface circuit, and the receiving unit 810 may be a receiver or an interface circuit. The receiver and the transmitter may be integrated to form a transceiver or an interface circuit.

Optionally, the apparatus 800 may further include a storage unit, configured to store data and/or signaling. The processing unit 830, the sending unit 820, and the receiving unit 810 may interact with or be coupled to the storage unit, for example, read or invoke the data and/or signaling in the storage unit, so that the method in the foregoing embodiments is performed.

The foregoing units may independently exist, or may be completely or partially integrated.

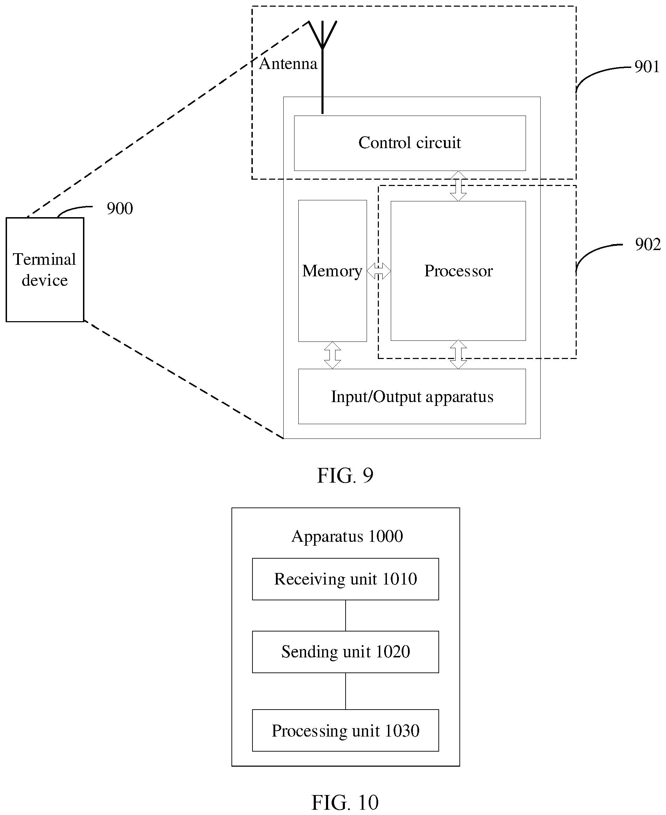

FIG. 9 is a diagram of a structure of a terminal device according to this application. The terminal device 900 may be used in the system shown in FIG. 1. For ease of description, FIG. 9 only shows main components of the terminal device. As shown in FIG. 9, the terminal device 900 includes a processor, a memory, a control circuit, an antenna, and an input/output apparatus. The processor is configured to control the antenna and the input/output apparatus to send and receive a signal. The memory is configured to store a computer program. The processor is configured to: invoke the computer program from the memory and run the computer program, to perform a corresponding procedure and/or operation performed by the terminal device in the method for registration provided in this application. Details are not described herein again.

A person skilled in the art may understand that, for ease of description, FIG. 9 shows only one memory and only one processor. In an actual terminal device, there may be a plurality of processors and a plurality of memories. The memory may also be referred to as a storage medium, a storage device, or the like. This is not limited in embodiments of this application.

FIG. 10 is a diagram of another communication apparatus according to this application. As shown in FIG. 10, the apparatus 1000 includes a receiving unit 1010, a sending unit 1020, and a processing unit 1030.

In an example, the sending unit 1020 is configured to send first configuration information to a terminal device, where the first configuration information indicates the terminal device to report channel state information, and the first configuration information includes identifiers of one or more first reference signals.

The receiving unit 1010 is configured to receive first information from the terminal device, where the first information includes channel state information of at least one second reference signal, and the at least one second reference signal is a part or all of the one or more first reference signals.

The first information includes first indication information. The first indication information indicates whether the terminal device stores a first quasi co-location QCL parameter of the at least one second reference signal.

In another example, the receiving unit 1010 is configured to receive the first information from the terminal device, where the first information includes an identifier of at least one third reference signal, and the first information indicates that the terminal device stores a second quasi co-location QCL parameter of the at least one third reference signal.

The processing unit 1030 is configured to determine that the terminal device stores the second QCL parameter of the at least one third reference signal.

The apparatus 1000 corresponds to the network device in the method embodiments.

The apparatus 1000 may be the network device in the method embodiments, or a chip or a functional module in the network device in the method embodiments. A corresponding unit of the apparatus 1000 is configured to perform corresponding steps performed by the network device in the method embodiments shown in FIG. 5 and FIG. 7.

The processing unit 1030 in the apparatus 1000 is configured to perform processing-related steps in the network device in the method embodiments. The sending unit 1020 in the apparatus 1000 is configured to perform sending-related steps of the network device. For example, steps S511, S510, S521, S522, and S530 in FIG. 5 are performed, or step S721 in FIG. 7 is performed.

The receiving unit 1010 in the apparatus 1000 is configured to perform a receiving step of the network device in the method embodiments. For example, step S520 in FIG. 5 or step S720 in FIG. 7 is performed.

The receiving unit 1010 and the sending unit 1020 may form a transceiver unit that has both receiving and sending functions. The processing unit 1030 may be at least one processor. The sending unit may be a transmitter or an interface circuit. The receiving unit may be a receiver or an interface circuit. The receiver and the transmitter may be integrated to form a transceiver or an interface circuit.

Optionally, the apparatus 1000 may further include a storage unit, configured to store data and/or signaling. The processing unit 1030, the sending unit 1020, and the receiving unit 1010 may interact with or be coupled to the storage unit, for example, read or invoke the data and/or signaling in the storage unit, so that the method in the foregoing embodiments is performed.

The foregoing units may independently exist, or may be completely or partially integrated.

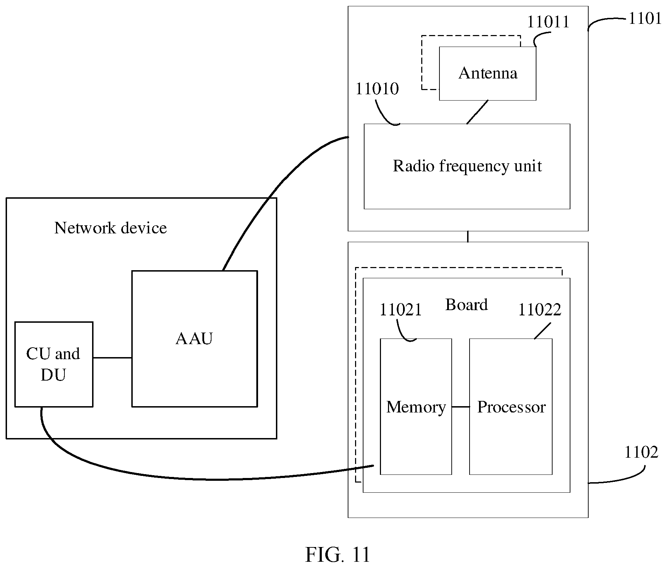

FIG. 11 is a diagram of a structure of a network device according to this application. The network device may be configured to implement functions of the network device in the foregoing communication methods.

In a possible implementation, for example, in some implementation solutions of a 5G communication system, the network device 1100 may include a CU, a DU, and an AAU. Different from an access network device including one or more radio frequency units, such as a remote radio unit (remote radio unit, RRU) 11010 and one or more base band units (base band units, BBUs) in an LTE communication system, a non-real-time part of the original BBU is segmented and redefined as the CU which is responsible for handling non-real-time protocols and services, some physical layer processing functions of the BBU are combined with the original RRU and a passive antenna to form the AAU, and the remaining functions of the BBU are redefined as the DU which is responsible for handling physical layer protocols and real-time services. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form is consistent with that of a conventional 4G access network device, in which the CU and the DU are deployed on same hardware. It should be understood that FIG. 11 is merely an example, and constitutes no limitation on the protection scope of this application. For example, the deployment form may alternatively be that DUs are deployed in a 5G BBU room, CUs or DUs are deployed together, or CUs are centralized at a higher level.

The AAU 1101 may implement a transceiver function, which is referred to as a transceiver unit. Optionally, the transceiver unit may also be referred to as a transceiver machine, a transceiver circuit, a transceiver, or the like, and may include at least one antenna 11011 and a radio frequency unit 11010. Optionally, the transceiver unit may include a receiving unit and a sending unit. The receiving unit may correspond to a receiver (or referred to as a receiver machine or a receiver circuit), and the sending unit may correspond to a transmitter (or referred to as a transmitter machine or a transmitter circuit). The CU and the DU 1102 may implement an internal processing function and be referred to as a processing unit. Optionally, the processing unit may control the access network device or the like, and may be referred to as a controller. The AAU 1101, the CU, and the DU 1102 may be physically disposed together, or may be physically disposed separately.

In addition, the access network device is not limited to the form shown in FIG. 11, and may alternatively be in another form. For example, the access network device includes the BBU and an ARU, includes the BBU and the AAU, may be a CPE, or may be in another form. This is not limited in this application.

It should be understood that the network device 1100 shown in FIG. 11 can implement the network device in the method embodiments in FIG. 5 and FIG. 7. Operations and/or functions of the units in the network device 1100 are used to implement a corresponding procedure performed by the network device in the method embodiments of this application. To avoid repetition, detailed descriptions are appropriately omitted herein. The structure of the network device shown in FIG. 11 is merely a possible form, but shall not constitute any limitation on embodiments of this application. This application does not exclude a possibility that there may be a network device structure in another form in the future.

An embodiment of this application further provides a communication system, including the foregoing terminal device and the foregoing network device.

This application further provides a computer-readable storage medium. The computer-readable storage medium stores instructions. When the instructions are run on a computer, the computer is enabled to perform the steps performed by the terminal device in the methods shown in FIG. 5 and FIG. 7.

This application further provides a computer-readable storage medium. The computer-readable storage medium stores instructions. When the instructions are run on a computer, the computer is enabled to perform the steps performed by the network device in the methods shown in FIG. 5 and FIG. 7.

This application further provides a computer program product including instructions. When the computer program product is run on a computer, the computer is enabled to perform the steps performed by the terminal device in the methods shown in FIG. 5 and FIG. 7.

This application further provides a computer program product including instructions. When the computer program product is run on a computer, the computer is enabled to perform the steps performed by the network device in the methods shown in FIG. 5 and FIG. 7.

This application further provides a chip, including a processor. The processor is configured to read and run a computer program stored in a memory, to perform a corresponding operation and/or procedure performed by the terminal device in the communication method provided in this application. Optionally, the chip further includes a memory, the memory and the processor are connected to each other by using a circuit or a wire, and the processor is configured to read and execute a computer program in the memory. Further, optionally, the chip further includes a communication interface, and the processor is connected to the communication interface. The communication interface is configured to receive data and/or information to be processed, and the processor obtains the data and/or information from the communication interface and processes the data and/or information. The communication interface may be an input/output interface, an interface circuit, an output circuit, an input circuit, a pin, a related circuit, or the like on the chip. The processor may alternatively be embodied as a processing circuit or a logic circuit.

This application further provides a chip, including a processor. The processor is configured to read and run a computer program stored in a memory, to perform a corresponding operation and/or procedure performed by the network device in the communication method provided in this application. Optionally, the chip further includes a memory, the memory and the processor are connected to each other by using a circuit or a wire, and the processor is configured to read and execute a computer program in the memory. Further, optionally, the chip further includes a communication interface, and the processor is connected to the communication interface. The communication interface is configured to receive data and/or information to be processed, and the processor obtains the data and/or information from the communication interface and processes the data and/or information. The communication interface may be an input/output interface, an interface circuit, an output circuit, an input circuit, a pin, a related circuit, or the like on the chip. The processor may alternatively be embodied as a processing circuit or a logic circuit.

The foregoing chip may alternatively be replaced with a chip system. Details are not described herein again.

In this application, the terms "include", "have", and any variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual conditions to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the term "and/or" in this application describes only an association relationship between associated objects, and indicates that three relationships may exist. For example, A and/or B may indicate the following three cases: Only A exists, both A and B exist, and only B exists. In addition, the character "/" in this specification generally indicates an "or" relationship between the associated objects. In this application, the term "at least one" may indicate "one" or "two or more". For example, at least one of A, B, and C may indicate the following seven cases: Only A exists, only B exists, only C exists, both A and B exist, both A and C exist, both C and B exist, and A, B, and C all exist.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first configuration information from a network device, wherein the first configuration information indicates the terminal device to report channel state information, and the first configuration information comprises identifiers of one or more first reference signals; and
sending, by the terminal device, first information to the network device, wherein the first information comprises channel state information of at least one second reference signal, and the at least one second reference signal is a part or all of the one or more first reference signals, wherein
the first information comprises first indication information, and the first indication information indicates whether the terminal device stores a first quasi co-location QCL parameter of the at least one second reference signal.

2. The method according to claim 1, wherein the method further comprises:
receiving, by the terminal device, the one or more first reference signals from the network device.

3. The method according to claim 1 or 2, wherein that the first indication information indicates whether the terminal device stores a first QCL parameter of the at least one second reference signal comprises:
the first indication information indicates whether the terminal device stores a second QCL parameter of at least one third reference signal of the at least one second reference signal; and
when the first indication information indicates that the terminal device stores the second QCL parameter of the at least one third reference signal of the at least one second reference signal,
the first information further comprises an identifier of the at least one third reference signal.

4. The method according to any one of claims 1 to 3, wherein any one of the at least one third reference signal meets a QCL relationship with a synchronization signal block SSB or a tracking reference signal TRS.

5. A communication method, comprising:
obtaining, by a terminal device, a second quasi co-location QCL parameter of at least one third reference signal; and
sending, by the terminal device, first information to a network device, wherein the first information comprises an identifier of the at least one third reference signal, and the first information indicates that the terminal device stores the second QCL parameter of the at least one third reference signal.

6. The method according to claim 5, wherein any one of the at least one third reference signal is a synchronization signal block SSB or a tracking reference signal TRS, or any one of the at least one third reference signal meets a QCL relationship with a synchronization signal block SSB or a tracking reference signal TRS.

7. The method according to claim 5 or 6, wherein the method further comprises:
receiving, by the terminal device, second indication information from the network device, wherein the second indication information indicates to activate a transmission configuration indicator state TCI-state, wherein
when the at least one third reference signal comprises a fourth reference signal corresponding to the TCI-state, an effective moment of the TCI-state is a moment after the first information is sent.

8. The method according to claim 5 or 6, wherein the method further comprises:
receiving, by the terminal device, second indication information from the network device, wherein the second indication information indicates to activate a transmission configuration indicator state TCI-state, wherein
when a fourth reference signal corresponding to the TCI-state meets a first condition, an effective moment of the TCI-state is a first moment; or
when a fourth reference signal corresponding to the TCI-state does not meet a first condition, an effective moment of the TCI-state is a second moment, wherein
the first condition comprises that the fourth reference signal is one of the at least one third reference signal, or the fourth reference signal meets the QCL relationship with one of the at least one third reference signal; and
the first moment is earlier than the second moment.

9. The method according to claim 8, wherein the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

10. The method according to claim 8 or 9, wherein that the fourth reference signal meets the QCL relationship with one of the at least one third reference signal comprises:
the fourth reference signal meets a typeA QCL relationship with one of the at least one third reference signal, wherein the typeA QCL relationship comprises that a channel over which an antenna port conveys the fourth reference signal and a channel over which an antenna port conveys the third reference signal have common Doppler shift, Doppler spread, average delay, and delay spread.

11. The method according to any one of claims 8 to 10, wherein duration between a third moment and a fourth moment is less than or equal to a first threshold, wherein
the third moment is a moment at which the terminal device receives the second indication information, and the fourth moment is a moment at which the terminal device sends the first information.

12. The method according to any one of claims 5 to 11, wherein the method further comprises:
receiving, by the terminal device, third indication information from the network device, wherein the third indication information indicates the terminal device to report a type of the second QCL parameter, wherein
the first information further comprises fourth indication information, and the fourth indication information indicates the type of the second QCL parameter that is of the at least one third reference signal and that is obtained by the terminal device.

13. The method according to claim 12, wherein the reported type of the second QCL parameter comprises a typeA or a type C.

14. A communication method, comprising:
sending, by a network device, first configuration information to a terminal device, wherein the first configuration information indicates the terminal device to report channel state information, and the first configuration information comprises identifiers of one or more first reference signals; and
receiving, by the network device, first information from the terminal device, wherein the first information comprises channel state information of at least one second reference signal, and the at least one second reference signal is a part or all of the one or more first reference signals, wherein
the first information comprises first indication information, and the first indication information indicates whether the terminal device stores a first quasi co-location QCL parameter of the at least one second reference signal.

15. The method according to claim 14, wherein the method further comprises:
sending, by the network device, the one or more first reference signals to the terminal device.

16. The method according to claim 15, wherein that the first indication information indicates whether the terminal device stores a first QCL parameter of the at least one second reference signal comprises:
the first indication information indicates whether the terminal device stores a second QCL parameter of at least one third reference signal of the at least one second reference signal; and
when the first indication information indicates that the terminal device stores the second QCL parameter of the at least one third reference signal of the at least one second reference signal,
the first information further comprises an identifier of the at least one third reference signal.

17. The method according to any one of claims 14 to 16, wherein any one of the at least one third reference signal meets a QCL relationship with a synchronization signal block SSB or a tracking reference signal TRS.

18. A communication method, comprising:
receiving, by a network device, first information from a terminal device, wherein the first information comprises an identifier of at least one third reference signal, and the first information indicates that the terminal device stores a second quasi co-location QCL parameter of the at least one third reference signal; and
determining, by the network device, that the terminal device stores the second QCL parameter of the at least one third reference signal.

19. The method according to claim 18, wherein any one of the at least one third reference signal is a synchronization signal block SSB or a tracking reference signal TRS, or any one of the at least one third reference signal meets a QCL relationship with a synchronization signal block SSB or a tracking reference signal TRS.

20. The method according to claim 18 or 19, wherein the method further comprises:
sending, by the network device, second indication information to the terminal device, wherein the second indication information indicates to activate a transmission configuration indicator state TCI-state, wherein
when the at least one third reference signal comprises a fourth reference signal corresponding to the TCI-state, an effective moment of the TCI-state is a moment after the first information is sent.

21. The method according to any one of claims 18 to 19, wherein the method further comprises:
sending, by the network device, second indication information to the terminal device, wherein the second indication information indicates to activate a transmission configuration indicator state TCI-state, wherein
when a fourth reference signal corresponding to the TCI-state meets a first condition, an effective moment of the TCI-state is a first moment; or
when a fourth reference signal corresponding to the TCI-state does not meet a first condition, an effective moment of the TCI-state is a second moment, wherein
the first condition comprises that the fourth reference signal is one of the at least one third reference signal, or the fourth reference signal meets the QCL relationship with one of the at least one third reference signal; and
the first moment is earlier than the second moment.

22. The method according to claim 21, wherein the first moment is a moment before which first duration elapses from a moment at which the second indication information is received, the second moment is a moment before which second duration elapses from the moment at which the second indication information is received, and the second duration is greater than or equal to a sum of the first duration, duration of waiting for the synchronization signal block SSB or the tracking reference signal TRS, and duration of processing the SSB or the TRS.

23. The method according to claim 21 or 22, wherein that the fourth reference signal meets the QCL relationship with one of the at least one third reference signal comprises:
the fourth reference signal meets a typeA QCL relationship with one of the at least one third reference signal, wherein the typeA QCL relationship comprises that a channel over which an antenna port conveys the fourth reference signal and a channel over which an antenna port conveys the third reference signal have common Doppler shift, Doppler spread, average delay, and delay spread.

24. The method according to any one of claims 21 to 23, wherein duration between a third moment and a fourth moment is less than or equal to a first threshold, wherein
the third moment is a moment at which the terminal device receives the second indication information, and the fourth moment is a moment at which the terminal device sends the first information.

25. The method according to any one of claims 18 to 24, wherein the method further comprises:
sending, by the network device, third indication information to the terminal device, wherein the third indication information indicates the terminal device to report a type of the second QCL parameter, wherein
the first information further comprises fourth indication information, and the fourth indication information indicates the type of the second QCL parameter that is of the at least one third reference signal and that is obtained by the terminal device.

26. The method according to claim 25, wherein the reported type of the second QCL parameter comprises a typeA or a typeC.

27. A communication system, comprising a terminal device and a network device, wherein the terminal device is configured to perform the method according to any one of claims 1 to 13, and the network device is configured to perform the method according to any one of claims 14 to 26.

28. A computer-readable storage medium, wherein the computer-readable storage medium stores computer instructions, and when the computer instructions are run on a terminal device, the terminal device is enabled to perform the method according to any one of claims 1 to 26.

29. A computer program product, comprising computer instructions, wherein when the computer instructions are run on a network device, the network device is enabled to perform the method according to any one of claims 1 to 26.
